(19) Europäisches Patentamt
European Patent Office
Office européen des brevets

(11) EP 4 032 947 A1

# (12) EUROPEAN PATENT APPLICATION

(43) Date of publication:
**27.07.2022 Bulletin 2022/30**

(21) Application number: **21153465.6**

(22) Date of filing: **26.01.2021**

(51) International Patent Classification (IPC):
***C08J 11/06** (2006.01)*

(52) Cooperative Patent Classification (CPC):
**C08J 11/06; B29B 13/00; D06P 1/00; D06P 1/90; D06P 5/13; D06P 5/132; D06P 5/134; D06P 5/137;** C08J 2323/06

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Smart Coloring GmbH**
**52074 Aachen (DE)**

(72) Inventor: **ROBERTZ, Bernd**
**52074 Aachen (DE)**

(74) Representative: **Michalski Hüttermann & Partner Patentanwälte mbB**
**Kaistraße 16A**
**40221 Düsseldorf (DE)**

## (54) METHOD FOR ACCELERATED DECOLORIZING A COLORED SYNTHETIC OR NON-SYNTHETIC POLAR-POLYMER MATERIAL

(57) The present invention relates to a method for accelerated decolorizing a colored synthetic or non-synthetic polar-polymer material comprising the steps of exposing the colored synthetic and/or non-synthetic polar-polymer material to a decoloring composition, wherein the decoloring composition comprises at least one aromatic carbonic acid ester, at least one reducing agent or at least one oxidizing agent, and at least one alkaline agent

EP 4 032 947 A1

## Description

The present invention relates to a method for accelerated decolorizing a colored synthetic or non-synthetic polar-polymer material.

## BACKGROUND OF THE INVENTION

Plastic articles are useful for a wide variety of applications. Furthermore, the recycling of colored plastic articles is even more important than ever before, as the volume of plastics discarded has proliferated in the last few decades. There is a great demand for more and more complex materials to satisfy the different aspects of the packaging industry.
Plastics are for example used extensively for beverage bottles, including bottles for carbonated soft drinks and other liquids. Many of the articles used in this way are colored by various types of pigments or colorants to enhance their appearance or to protect the contents of the bottle from ultraviolet radiation.
There is a great need in the recycling industry for better methods and technologies for removing colorants from plastics. A plastic material that is to be recycled typically is washed, flaked or pelletized, and then supplied to a solid-state reactor in the process of converting waste plastic into various articles. The recycling of colored plastic material leads to dark grey or black, and the one main bottleneck of said recycled granules today is that they must be compounded with virgin material in order to be able to be "recolorized" in their next life. "Recoloring" of such materials often leads to color differences. Recyclers counter this with the addition of other colorants such as titanium dioxide. However, this impairs the physical properties and processability of the plastics, which further restricts their range of application. In particular, further recycling is made much more difficult because additional colorants are added with each cycle, further impairing the physical properties of the polymer. Therefore, there exists a strong need to remove the coloration from many types of plastics.
Several attempts have been made to remove the color from colored plastics. Some methods solubilize the polymer and use additives to improve liquid solid separations after solubilization of the polymer.
Other methods rely on oxidizing or reducing agents to chemically alter the colorant or chromophore in the plastic. For example US 2006/0148914 A1 describes a method for substantially decolorizing a colored thermoplastic, wherein the color is destroyed by an oxidizing the color or reducing the color.
Due to solubilization of a polymer the polymer material may not have the same structure, doesn't contain the additives that gives polymer the physical properties that means the polymer doesn't have the same physical characteristics as before. Furthermore, by chemical alteration of the colorant or chromophore in the polymer material, the polymer material itself may also change its structure and/or its physical features. In addition the colorant or chromophore still remains in the polymer material but in a decolorized and/or fragmented form.

## SUMMARY OF THE INVENTION

It is an object of the invention to provide a method for accelerated decolorizing a colored synthetic and/or non-synthetic polar-polymer material, that does not alter the chemical structure and physical features of the synthetic and/or non-synthetic polar-polymer material.
A synthetic and non-synthetic material is a material that comprises a mixture of synthetic and non-synthetic materials.
The object is solved by the features of the independent claim. Preferred embodiments are described by the features of the dependent claims.
Thus, the object is solved by a method for decolorizing a colored synthetic and/or non-synthetic polar-polymer material, comprising the steps:

exposing the colored synthetic and/or non-synthetic polar-polymer material to a decoloring composition, wherein the decoloring composition comprises at least one aromatic carbonic acid ester, at least one reducing agent or at least one oxidizing agent, and at least one alkaline agent and optional a solvent as a main component; wherein the colored synthetic and/or non-synthetic polar-polymer material to be decolorized comprises:

- at least one organic aromatic coloring agent having a molecular weight Mw in the range of about ≥ 230 g/mol to about ≤ 750 g/mol, wherein the organic aromatic coloring agent is not a chemical reactive organic aromatic coloring agent that forms a chemical covalently bound;

  i) at least one synthetic and/or non-synthetic polar-polymer having a Mw of about ≥ 1000 g/mol, or
  ii) at least one synthetic and/or non-synthetic non-polar-polymer having a Mw of about ≥ 1000 g/mol;
  wherein the synthetic and/or non-synthetic non-polar-polymer comprises in addition:

- at least one synthetic and/or non-synthetic polar-polymer having a Mw of about ≥ 1000 g/mol, and/or
- at least one synthetic and/or non-synthetic polar-oligomer having a Mw of about ≥ 600 g/mol and < 1000 g/mol, and/or
- at least one synthetic and/or non-synthetic polar-additive having a Mw of about ≥ 70 and < 600 g/mol;

wherein the polar-additive is selected different to the organic aromatic coloring agent having a molecular weight Mw in the range of about ≥ 230 g/mol to about ≤ 750 g/mol.

The components of the decoloring composition comprising at least one aromatic carbonic acid ester, at least one reducing agent, at least one oxidizing agent, at least one alkaline agent and optional a solvent as a main component are all selected different in there chemical formula from each.

The organic aromatic coloring agent having a molecular weight Mw in the range of about ≥ 230 g/mol to about ≤ 750 g/mol, if not otherwise defined, is a non-chemical reactive organic aromatic coloring agent that forms no chemical covalent bond. Forming no chemical covalent bond means according to the present invention that the organic aromatic coloring agent having a molecular weight Mw in the range of about ≥ 230 g/mol to about ≤ 750 g/mol doesn't form a covalent sigma bond, covalent double, covalent triple or any other chemical covalent bond with the colored synthetic and/or non-synthetic polar-polymer material.

The method for decolorizing a colored synthetic and/or non-synthetic polar-polymer material, is based on the use of a decoloring composition, wherein the decoloring composition comprises at least one aromatic carbonic acid ester, at least one reducing agent or at least one oxidizing agent, and at least one alkaline agent.

According to one embodiment the method for decolorizing a colored synthetic and/or non-synthetic polar-polymer material, is based on the use of a decoloring composition, wherein the decoloring composition comprises at least one aromatic carbonic acid ester, at least one reducing agent or at least one oxidizing agent, at least one alkaline agent and a solvent, wherein the solvent is preferably liquid at room temperature of 23° C. The solvent can be a polar liquid and/or a non-polar liquid. Preferably the liquid is an alcohol that is liquid at room temperature of 23° C and/or water, and more preferred water.

The organic aromatic coloring agent having a molecular weight Mw in the range of about ≥ 230 g/mol to about ≤ 750 g/mol can comprise one organic aromatic coloring agent having a molecular weight Mw in the range of about ≥ 230 g/mol to about ≤ 750 g/mol or a mixture of organic aromatic coloring agents having a molecular weight Mw in the range of about ≥ 230 g/mol to about ≤ 750 g/mol. Using a mixture of a mixture of organic aromatic coloring agents having a molecular weight Mw in the range of about ≥ 230 g/mol to about ≤ 750 g/mol a variety of different colors can be obtained.

The organic aromatic coloring agent, having a molecular weight Mw in the range of about ≥ 230 g/mol to about ≤ 750 g/mol, is not a chemical reactive organic aromatic coloring agent that forms a chemical covalent bond, so that the organic aromatic coloring agent may migrate out of the colored polar polymer material into the decoloring composition, wherein the decoloring composition can preferably contain a polar solvent as the main component, for example water.

According to one embodiment the method for decolorizing a colored synthetic and/or non-synthetic polar-polymer material, comprises the steps:

exposing the colored synthetic and/or non-synthetic polar-polymer material to a decoloring composition comprising at least one aromatic carbonic acid ester, at least one reducing agent or at least one oxidizing agent, at least one alkaline agent and a solvent, at a temperature of about ≥ 80 °C to about ≤ 200 °C, preferably about ≥ 100 °C to about ≤ 120 °C, wherein the decoloring composition comprises the solvent as a main component and the solvent is liquid at room temperature of 23 ° C, wherein the solvent is preferably a polar solvent, and more preferred water.

According to one embodiment the method for decolorizing a colored synthetic and/or non-synthetic polar-polymer material, comprising the steps:

exposing the colored synthetic and/or non-synthetic polar-polymer material to a decoloring composition comprising at least one aromatic carbonic acid ester, at least one reducing agent or at least one oxidizing agent, at least one alkaline agent and as a main component a polar solvent at a temperature of about ≥ 80 °C to about ≤ 200 °C, preferably about ≥ 100 °C to about ≤ 120 °C, wherein the decoloring composition is exposed to at least one colored synthetic and/or non-synthetic polar-polymer material to be decolorized comprising:

- at least one organic aromatic coloring agent having a molecular weight Mw in the range of about ≥ 230 g/mol to about ≤ 750 g/mol, wherein the organic aromatic coloring agent is not a chemical reactive organic aromatic coloring agent that forms a chemical covalently bound;

  i) at least one synthetic and/or non-synthetic polar-polymer having a Mw of about ≥ 1000 g/mol, or
  ii) at least one synthetic and/or non-synthetic non-polar-polymer having a Mw of about ≥ 1000 g/mol;

wherein the synthetic and/or non-synthetic non-polar-polymer comprises in addition:

- at least one synthetic and/or non-synthetic polar-polymer having a Mw of about ≥ 1000 g/mol, and/or
- at least one synthetic and/or non-synthetic polar-oligomer having a Mw of about ≥ 600 g/mol and < 1000 g/mol, and/or
- at least one synthetic and/or non-synthetic polar-additive having a Mw of about ≥ 70 and < 600 g/mol;

wherein the polar-additive is selected different to the organic aromatic coloring agent having a molecular weight Mw in the range of about ≥ 230 g/mol to about ≤ 750 g/mol; and wherein

- the synthetic and/or non-synthetic polar-polymer comprises at least ≥ 5 wt.-% of heteroatoms, based on the total weight of the synthetic and/or non-synthetic polar-polymer, wherein a heteroatom is any atom excluding C-atoms and H-atoms; and/or
- the synthetic and/or non-synthetic polar-oligomer comprises at least ≥ 5 wt.-% of heteroatoms, based on the total weight of the synthetic and/or non-synthetic polar-oligomer, wherein a heteroatom is any atom excluding C-atoms and H-atoms; and/or
- the synthetic and/or non-synthetic polar additive comprises at least ≥ 5 wt.-% of heteroatoms, based on the total weight of the synthetic and/or non-synthetic polar additive, wherein a heteroatom is any atom excluding C-atoms and H-atoms.

According to one embodiment the method for decolorizing a colored synthetic and/or non-synthetic polar-polymer material, comprising the steps:

exposing the colored synthetic and/or non-synthetic polar-polymer material to a decoloring composition comprising at least one aromatic carbonic acid ester, at least one reducing agent or at least one oxidizing agent, at least one alkaline agent and as a main component a polar solvent at a temperature of about ≥ 80 °C to about ≤ 200 °C, preferably about ≥ 100 °C to about ≤ 120 °C, wherein the decoloring composition is exposed to at least one colored synthetic and/or non-synthetic polar-polymer material to be decolorized comprising:

- at least one organic aromatic coloring agent having a molecular weight Mw in the range of about ≥ 230 g/mol to about ≤ 750 g/mol, wherein the organic aromatic coloring agent is not a chemical reactive organic aromatic coloring agent that forms a chemical covalently bound;

  i) at least one synthetic and/or non-synthetic polar-polymer having a Mw of about ≥ 1000 g/mol, or
  ii) at least one synthetic and/or non-synthetic non-polar-polymer having a Mw of about ≥ 1000 g/mol;

wherein the synthetic and/or non-synthetic non-polar-polymer comprises in addition:

- at least 5 wt.-%, based on the total weight amount of the synthetic and/or non-synthetic non-polar-polymer, of at least one synthetic and/or non-synthetic polar-polymer having a Mw of about ≥ 1000 g/mol, and wherein the synthetic and/or non-synthetic polar-polymer comprises at least ≥ 5 wt.-% of heteroatoms, based on the total weight of the synthetic and/or non-synthetic polar-polymer, wherein a heteroatom is any atom excluding C-atoms and H-atoms.
- the synthetic and/or non-synthetic polar-oligomer comprises at least ≥ 5 wt.-% of heteroatoms, based on the total weight of the synthetic and/or non-synthetic polar-oligomer, wherein a heteroatom is any atom excluding C-atoms and H-atoms; and/or
- the synthetic and/or non-synthetic polar additive comprises at least ≥ 5 wt.-% of heteroatoms, based on the total weight of the synthetic and/or non-synthetic polar additive, wherein a heteroatom is any atom excluding C-atoms and H-atoms.

According to one embodiment the method for decolorizing a colored synthetic and/or non-synthetic polar-polymer material, comprises the steps:

exposing the colored synthetic and/or non-synthetic polar-polymer material to a decoloring composition comprising at least one aromatic carbonic acid ester, at least one reducing agent or at least one oxidizing agent, at least one alkaline agent and a solvent, at a temperature about
≥ 80 °C to about ≤ 200 °C, preferably about ≥ 100 °C to about ≤ 120 °C, wherein the decoloring composition comprises the solvent as a main component and the solvent is liquid at room temperature of 23° C, wherein the solvent is

preferably a polar solvent, and more preferred water.

According to one embodiment the method for decolorizing a colored synthetic and/or non-synthetic polar-polymer material, comprises the steps:

exposing the colored synthetic and/or non-synthetic polar-polymer material to a decoloring composition comprising at least one aromatic carbonic acid ester, at least one reducing agent or at least one oxidizing agent, at least one alkaline agent and as a main component a polar solvent at a temperature about ≥ 80 °C to about ≤ 200 °C, preferably about ≥ 100 °C to about ≤ 120 °C, wherein the decoloring composition is exposed to at least one colored synthetic and/or non-synthetic polar-polymer material to be decolorized comprising:

- at least one organic aromatic coloring agent having a molecular weight Mw in the range of about ≥ 230 g/mol to about ≤ 750 g/mol, wherein the organic aromatic coloring agent is not a chemical reactive organic aromatic coloring agent that forms a chemical covalently bound;

  i) at least one synthetic and/or non-synthetic polar-polymer having a Mw of about ≥ 1000 g/mol, or
  ii) at least one synthetic and/or non-synthetic non-polar-polymer having a Mw of about ≥ 1000 g/mol;

wherein the synthetic and/or non-synthetic non-polar-polymer comprises in addition:

- at least 5 wt.-%, based on the total weight amount of the synthetic and/or non-synthetic non-polar-polymer, of at least one synthetic and/or non-synthetic polar-polymer having a Mw of about ≥ 1000 g/mol, and wherein the synthetic and/or non-synthetic polar-polymer comprises at least ≥ 5 wt.-% of heteroatoms, based on the total weight of the synthetic and/or non-synthetic polar-polymer, wherein a heteroatom is any atom excluding C-atoms and H-atoms; and/or
- at least 5 wt.-%, based on the total weight amount of the synthetic and/or non-synthetic non-polar-polymer, of at least one synthetic and/or non-synthetic polar-oligomer comprises at least ≥ 5 wt.-% of heteroatoms, based on the total weight of the synthetic and/or non-synthetic polar-oligomer, wherein a heteroatom is any atom excluding C-atoms and H-atoms; and/or
- at least 5 wt.-%, based on the total weight amount of the synthetic and/or non-synthetic non-polar-polymer, of at least one synthetic and/or non-synthetic polar additive comprises at least ≥ 5 wt.-% of heteroatoms, based on the total weight of the synthetic and/or non-synthetic polar additive, wherein a heteroatom is any atom excluding C-atoms and H-atoms.

According to one embodiment the method for decolorizing a colored synthetic and/or non-synthetic polar-polymer material, comprises the steps:

exposing the colored synthetic and/or non-synthetic polar-polymer material to a decoloring composition comprising at least one aromatic carbonic acid ester, at least one reducing agent or at least one oxidizing agent, at least one alkaline agent and as a main component a polar solvent at a temperature about ≥ 80 °C to about ≤ 200 °C, preferably about ≥ 100 °C to about ≤ 120 °C, wherein the decoloring composition is exposed to at least one colored synthetic and/or non-synthetic polar-polymer material to be decolorized comprising:

- at least one organic aromatic coloring agent having a molecular weight Mw in the range of about ≥ 230 g/mol to about ≤ 750 g/mol, wherein the organic aromatic coloring agent is not a chemical reactive organic aromatic coloring agent that forms a chemical covalently bound;

  i) at least one synthetic and/or non-synthetic polar-polymer having a Mw of about ≥ 1000 g/mol, or
  ii) at least one synthetic and/or non-synthetic non-polar-polymer having a Mw of about ≥ 1000 g/mol;

wherein the synthetic and/or non-synthetic non-polar-polymer comprises in addition:

- at least one synthetic and/or non-synthetic polar-polymer having a Mw of about ≥ 1000 g/mol, and wherein the synthetic and/or non-synthetic polar-polymer comprises at least ≥ 5 wt.-% of heteroatoms, based on the total weight of the synthetic and/or non-synthetic polar-polymer, wherein a heteroatom is any atom excluding C-atoms and H-atoms.

According to one embodiment the method for decolorizing a colored synthetic and/or non-synthetic polar-polymer material, comprises the steps:

exposing the colored synthetic and/or non-synthetic polar-polymer material to a decoloring composition comprising at least one aromatic carbonic acid ester, at least one reducing agent or at least one oxidizing agent, at least one alkaline agent and as a main component a polar solvent at a temperature about ≥ 80 °C to about ≤ 200 °C, preferably about ≥ 100 °C to about ≤ 120 °C, wherein the decoloring composition is exposed to at least one colored synthetic and/or non-synthetic polar-polymer material to be decolorized comprising:

- at least one organic aromatic coloring agent having a molecular weight Mw in the range of about ≥ 230 g/mol to about ≤ 750 g/mol, wherein the organic aromatic coloring agent is not a chemical reactive organic aromatic coloring agent that forms a chemical covalently bound;

  i) at least one synthetic and/or non-synthetic polar-polymer having a Mw of about ≥ 1000 g/mol, or
  ii) at least one synthetic and/or non-synthetic non-polar-polymer having a Mw of about ≥ 1000 g/mol;

wherein the synthetic and/or non-synthetic non-polar-polymer comprises in addition:

- at least 5 wt.-%, based on the total weight amount of the synthetic and/or non-synthetic non-polar-polymer, of at least one synthetic and/or non-synthetic polar-oligomer comprises at least ≥ 5 wt.-% of heteroatoms, based on the total weight of the synthetic and/or non-synthetic polar-oligomer, wherein a heteroatom is any atom excluding C-atoms and H-atoms.

According to one embodiment the method for decolorizing a colored synthetic and/or non-synthetic polar-polymer material, comprises the steps:

exposing the colored synthetic and/or non-synthetic polar-polymer material to a decoloring composition comprising at least one aromatic carbonic acid ester, at least one reducing agent or at least one oxidizing agent, at least one alkaline agent and as a main component a polar solvent at a temperature about ≥ 80 °C to about ≤ 200 °C, preferably about ≥ 100 °C to about ≤ 120 °C, wherein the decoloring composition is exposed to at least one colored synthetic and/or non-synthetic polar-polymer material to be decolorized comprising:

- at least one organic aromatic coloring agent having a molecular weight Mw in the range of about ≥ 230 g/mol to about ≤ 750 g/mol, wherein the organic aromatic coloring agent is not a chemical reactive organic aromatic coloring agent that forms a chemical covalently bound;

  i) at least one synthetic and/or non-synthetic polar-polymer having a Mw of about ≥ 1000 g/mol, or
  ii) at least one synthetic and/or non-synthetic non-polar-polymer having a Mw of about ≥ 1000 g/mol;

wherein the synthetic and/or non-synthetic non-polar-polymer comprises in addition:

- at least 5 wt.-%, based on the total weight amount of the synthetic and/or non-synthetic non-polar-polymer, of at least one polar additive comprises at least ≥ 5 wt.-% of heteroatoms, based on the total weight of the synthetic and/or non-synthetic polar additive, wherein a heteroatom is any atom excluding C-atoms and H-atoms, wherein the polar-additive is selected different to the organic aromatic coloring agent having a molecular weight Mw in the range of about ≥ 230 g/mol to about ≤ 750 g/mol.

According to one embodiment the method for decolorizing a colored synthetic and/or non-synthetic polar-polymer material, comprising the steps:
exposing the colored synthetic and/or non-synthetic polar-polymer material to a decoloring composition comprising at least one aromatic carbonic acid ester, at least one reducing agent or at least one oxidizing agent, at least one alkaline agent and as a main component a polar solvent at a temperature of about ≥ 80 °C to about ≤ 200 °C, preferably about ≥ 100 °C to about ≤ 120 °C, wherein the decoloring composition is exposed to at least one colored synthetic and/or non-synthetic polar-polymer material to be decolorized comprising:

- at least one organic aromatic coloring agent having a molecular weight Mw in the range of about ≥ 230 g/mol to about ≤ 750 g/mol, wherein the organic aromatic coloring agent is not a chemical reactive organic aromatic coloring agent that forms a chemical covalently bound;
- at least one synthetic and/or non-synthetic polar-polymer having a Mw of about ≥ 1000 g/mol, wherein the synthetic

and/or non-synthetic polar-polymer comprises at least ≥ 5 wt.-% of heteroatoms, based on the total weight of the synthetic and/or non-synthetic polar-polymer, wherein a heteroatom is any atom excluding C-atoms and H-atoms.

According to one embodiment the method for decolorizing a colored synthetic and/or non-synthetic polar-polymer material, comprising the steps:
exposing the colored synthetic and/or non-synthetic polar-polymer material to a decoloring composition comprising at least one aromatic carbonic acid ester, at least one reducing agent or at least one oxidizing agent, at least one alkaline agent and as a main component a polar solvent at a temperature of about ≥ 80 °C to about ≤ 200 °C, preferably about ≥ 100 °C to about ≤ 120 °C, wherein the decoloring composition is exposed to at least one colored synthetic and/or non-synthetic polar-polymer material to be decolorized comprising:

- at least one organic aromatic coloring agent having a molecular weight Mw in the range of about ≥ 230 g/mol to about ≤ 750 g/mol, wherein the organic aromatic coloring agent is not a chemical reactive organic aromatic coloring agent that forms a chemical covalently bound;
- at least one synthetic and/or non-synthetic non-polar-polymer having a Mw of about ≥ 1000 g/mol, wherein the synthetic and/or non-synthetic non-polar-polymer comprises in addition at least 5 wt.-%, based on the total weight amount of the synthetic and/or non-synthetic non-polar-polymer, of at least one synthetic and/or non-synthetic polar-polymer having a Mw of about ≥ 1000 g/mol, and wherein the synthetic and/or non-synthetic polar-polymer comprises at least ≥ 5 wt.-% of heteroatoms, based on the total weight of the synthetic and/or non-synthetic polar-polymer, wherein a heteroatom is any atom excluding C-atoms and H-atoms.

According to one embodiment the method for decolorizing a colored synthetic and/or non-synthetic polar-polymer material, comprises the steps:
exposing the colored synthetic and/or non-synthetic polar-polymer material to a decoloring composition comprising at least one aromatic carbonic acid ester, at least one reducing agent or at least one oxidizing agent, at least one alkaline agent and as a main component a polar solvent at a temperature of about ≥ 80 °C to about ≤ 200 °C, preferably about ≥ 100 °C to about ≤ 120 °C, wherein the decoloring composition is exposed to at least one colored synthetic and/or non-synthetic polar-polymer material to be decolorized comprising:

- at least one organic aromatic coloring agent having a molecular weight Mw in the range of about ≥ 230 g/mol to about ≤ 750 g/mol, wherein the organic aromatic coloring agent is not a chemical reactive organic aromatic coloring agent that forms a chemical covalently bound;
- at least one synthetic and/or non-synthetic non-polar-polymer having a Mw of about ≥ 1000 g/mol; wherein the synthetic and/or non-synthetic non-polar-polymer comprises in addition at least 5 wt.-%, based on the total weight amount of the synthetic and/or non-synthetic non-polar-polymer, of at least one synthetic and/or non-synthetic polar-oligomer comprises at least ≥ 5 wt.-% of heteroatoms, based on the total weight of the synthetic and/or non-synthetic polar-oligomer, wherein a heteroatom is any atom excluding C-atoms and H-atoms.

According to one embodiment the method for decolorizing a colored synthetic and/or non-synthetic polar-polymer material, comprises the steps:
exposing the colored synthetic and/or non-synthetic polar-polymer material to a decoloring composition comprising at least one aromatic carbonic acid ester, at least one reducing agent or at least one oxidizing agent, at least one alkaline agent and as a main component a polar solvent at a temperature of about ≥ 80 °C to about ≤ 200 °C, preferably about ≥ 100 °C to about ≤ 120 °C, wherein the decoloring composition is exposed to at least one colored synthetic and/or non-synthetic polar-polymer material to be decolorized comprising:

- at least one organic aromatic coloring agent having a molecular weight Mw in the range of about ≥ 230 g/mol to about ≤ 750 g/mol, wherein the organic aromatic coloring agent is not a chemical reactive organic aromatic coloring agent that forms a chemical covalently bound;
- at least one synthetic and/or non-synthetic non-polar-polymer having a Mw of about ≥ 1000 g/mol, wherein the synthetic and/or non-synthetic non-polar-polymer comprises in addition at least 5 wt.-%, based on the total weight amount of the synthetic and/or non-synthetic non-polar-polymer, of at least one polar additive comprises at least ≥ 5 wt.-% of heteroatoms, based on the total weight of the synthetic and/or non-synthetic polar additive, wherein a heteroatom is any atom excluding C-atoms and H-atoms.

According to one embodiment the colored synthetic and/or non-synthetic polar-polymer material, which is decolorized by a method of the present invention, may have the form of an article. According to another embodiment the colored synthetic and/or non-synthetic polar-polymer material may have the form of an article that is a container or

plastic part, preferably the colored synthetic and/or non-synthetic polar-polymer material has the form of an article that is obtained by molding, blow-forming, extrusion and/or injection-molding. According to an another embodiment, the colored synthetic and/or non-synthetic polar-polymer material, which is decolorized by a method of the present invention, may have the form of:

- thin foils, flakes, particles, granulates, preferably the particles, granulates and more preferred particles and/or granulates having a mean particle size diameter of 0.1 mm to 100 mm, further preferred 1 mm to 50 mm and also preferred 2 mm to 10 mm, further more preferred the particles and/or granulates have a round shape, and most preferred the shape of a thin foil, and/or
- particles and/or granulates may have a mean particle size diameter of 0.01 mm to 10 mm, further preferred 1 mm to 8 mm and also preferred 2 mm to 5 mm, and/or
- nano-particles having a mean particle size diameter of about ≥ 1 nm to about ≤ 100 nm.

In general discoloration of the colored synthetic and/or non-synthetic polar-polymer material in the shredded state may be faster and by a higher grade of decolorization due to the enlargement of the surface. The entire article, such as an original fabricated colored part, may be decolored by using the method of the present invention, if it is desired that the article should be received in its original form. Articles in its original form may be decolorized by a process according to invention, if these parts lost for example color by UV-light and/or other environmental impact.

The design of thin foils, such as thin stretched films may be most suitable for decoloring the larger surface by a method of the present invention.

According to one embodiment the method for decolorizing a colored synthetic and/or non-synthetic polar-polymer material, comprises the steps:

exposing the colored synthetic and/or non-synthetic polar-polymer material to a decoloring composition, wherein the decoloring composition comprises at least one aromatic carbonic acid ester, at least one reducing agent or at least one oxidizing agent, at least one alkaline agent and a solvent, which is liquid a 23° C, at a temperature of about ≥ 80 °C to about ≤ 200 °C, preferably ≥ 100 °C to about ≤ 120 °C, wherein the solvent is a polar solvent, and is exposed to at least one colored synthetic and/or non-synthetic polar-polymer material, wherein the p colored synthetic and/or non-synthetic polar-polymer material have the form of:

- thin foils, flakes, particles, granulates, preferably the particles, granulates have a mean particle size diameter of 0.1 mm to 10 mm, further preferred 1 mm to 8 mm and also preferred 2 mm to 5 mm, and most preferred the particles, granulates may have a round shape, and/or
- thin foils, flakes, particles, granulates, preferably the particles, granulates may have a mean particle size diameter of 0.01 mm to 10 mm, further preferred 1 mm to 8 mm and also preferred 2 mm to 5 mm, and more preferred the particles, granulates may have a round shape, and/or
- nano-particles having a mean particle size diameter of about ≥ 1 nm to about ≤ 100 nm, preferably the nano-particles

and the colored synthetic and/or non-synthetic polar-polymer material to be decolorized comprises:

- at least one organic aromatic coloring agent having a molecular weight Mw in the range of about ≥ 230 g/mol to about ≤ 750 g/mol, wherein the organic aromatic coloring agent is not a chemical reactive organic aromatic coloring agent that forms a chemical covalently bound;
- i) at least one synthetic and/or non-synthetic polar-polymer having a Mw of about ≥ 1000 g/mol, or
- ii) at least one synthetic and/or non-synthetic non-polar-polymer having a Mw of about ≥ 1000 g/mol;

wherein the synthetic and/or non-synthetic non-polar-polymer comprises in addition:

- at least one synthetic and/or non-synthetic polar-polymer having a Mw of about ≥ 1000 g/mol, and/or
- at least one synthetic and/or non-synthetic polar-oligomer having a Mw of about ≥ 600 g/mol and < 1000 g/mol, and/or
- at least one synthetic and/or non-synthetic polar-additive having a Mw of about ≥ 70 and < 600 g/mol;

wherein the polar-additive is selected different to the organic aromatic coloring agent having a molecular weight Mw in the range of about ≥ 230 g/mol to about ≤ 750 g/mol.

The benefit of the process of the present invention is that the colored synthetic and/or non-synthetic polar-polymer material that has the form of a container or plastic part, can be decolorized by the process of the present invention, without any need to destroy and/or shredding said article. Therefore, a reuse of the article is easily possible. Furthermore also a recoloring and/or a color enhancement of said article may be possible.

For example bottles, wherein the bottles or at least the outer surface layer thereof, are of a colored synthetic

and/or non-synthetic polar-polymer material, wherein the colored synthetic and/or non-synthetic polar-polymer material is colored with the organic aromatic coloring agent having a molecular weight Mw in the range of about ≥ 230 g/mol to about ≤ 750 g/mol, wherein the organic aromatic coloring agent is not a chemical reactive organic aromatic coloring agent that forms a chemical covalently bound, can be decolorized by the process of the present invention by maintain the form of the bottle.

For example car plastic parts, wherein the car plastic parts or at least the outer surface layer thereof, are of a colored synthetic and/or non-synthetic polar-polymer material, wherein the colored synthetic and/or non-synthetic polar-polymer material is colored with the organic aromatic coloring agent having a molecular weight Mw in the range of about ≥ 230 g/mol to about ≤ 750 g/mol, wherein the organic aromatic coloring agent is not a chemical reactive organic aromatic coloring agent that forms a chemical covalently bound, can be decolorized by the process of the present invention by maintain the form of the auto plastic parts.

For example plastic tableware, wherein the plastic tableware or at least the outer surface layer thereof, are of a colored synthetic and/or non-synthetic polar-polymer material, wherein the colored synthetic and/or non-synthetic polar-polymer material is colored with the organic aromatic coloring agent having a molecular weight Mw in the range of about ≥ 230 g/mol to about ≤ 750 g/mol, wherein the organic aromatic coloring agent is not a chemical reactive organic aromatic coloring agent that forms a chemical covalently bound, can be decolorized by the process of the present invention by maintain the form of the plastic tableware.

For example all kinds of plastic items, wherein the plastic items or at least the outer surface layer thereof, are of a colored synthetic and/or non-synthetic polar-polymer material, wherein the colored synthetic and/or non-synthetic polar-polymer material is colored with the organic aromatic coloring agent having a molecular weight Mw in the range of about ≥ 230 g/mol to about ≤ 750 g/mol, wherein the organic aromatic coloring agent is not a chemical reactive organic aromatic coloring agent that forms a chemical covalently bound, can be decolorized by the process of the present invention by maintain the form of the plastic items.

According to one embodiment the colored synthetic and/or non-synthetic polar-polymer material may not have the form of flakes, particles, granulates. According to one embodiment the colored synthetic and/or non-synthetic polar-polymer material may not have the form of nano-particles.

According to one embodiment the method for decolorizing a colored synthetic and/or non-synthetic polar-polymer material, comprising the steps of exposing the colored synthetic and/or non-synthetic polar-polymer material to a polar solvent at a temperature of about ≥ 80 °C to about ≤ 140 °C, preferably of about ≥ 100 °C to about ≤ 120 °C, wherein the decoloring composition comprises at least one aromatic carbonic acid ester, at least one reducing agent or at least one oxidizing agent, at least one alkaline agent and a polar solvent is exposed to at least one colored synthetic and/or non-synthetic polar-polymer material, wherein the decoloring composition before the decolorizing of the colored synthetic and/or non-synthetic polar-polymer material starts is free of an organic aromatic coloring agent having a molecular weight Mw in the range of about ≥ 230 g/mol to about ≤ 750 g/mol, and preferably free of a dye, and wherein the colored synthetic and/or non-synthetic polar-polymer material to be decolorized comprises:

- at least one organic aromatic coloring agent having a molecular weight Mw in the range of about ≥ 230 g/mol to about ≤ 750 g/mol, wherein the organic aromatic coloring agent is not a chemical reactive organic aromatic coloring agent that forms a chemical covalently bound;
- i) at least one synthetic and/or non-synthetic polar-polymer having a Mw of about ≥ 1000 g/mol, or
- ii) at least one synthetic and/or non-synthetic non-polar-polymer having a Mw of about ≥ 1000 g/mol;

wherein the synthetic and/or non-synthetic non-polar-polymer comprises in addition:

- at least one synthetic and/or non-synthetic polar-polymer having a Mw of about ≥ 1000 g/mol, and/or
- at least one synthetic and/or non-synthetic polar-oligomer having a Mw of about ≥ 600 g/mol and < 1000 g/mol, and/or
- at least one synthetic and/or non-synthetic polar-additive having a Mw of about ≥ 70 and < 600 g/mol;

wherein the polar-additive is selected different to the organic aromatic coloring agent having a molecular weight Mw in the range of about ≥ 230 g/mol to about ≤ 750 g/mol.

A decoloring composition that is free of a dye means, that the decoloring composition is exposed to the colored synthetic and/or non-synthetic polar-polymer material, may be colorless, may have a natural color, may be free of an additional added dye, may be white or may be transparent. Some decoloring composition that can be suitable used in the process of the present invention, may have a natural color, such as yellow, orange or beige.

According to one embodiment the method for decolorizing a colored synthetic and/or non-synthetic polar-polymer material, comprising the steps:
exposing the colored synthetic and/or non-synthetic polar-polymer material to a decoloring composition comprising at least one aromatic carbonic acid ester, at least one reducing agent, a solvent and at least one alkaline agent at a

temperature of about ≥ 80 °C to about ≤ 140 °C, preferably of about ≥ 90 °C to about ≤ 130 °C, and further preferred of about ≥ 100 °C to about ≤ 120 °C.

According to one embodiment the method for decolorizing a colored synthetic and/or non-synthetic polar-polymer material, comprising the step, wherein the colored synthetic and/or non-synthetic polar-polymer material is decolorized by exposing the colored synthetic and/or non-synthetic polar-polymer material to the decoloring composition at a temperature of about ≥ 30 °C to about ≤ 200 °C, wherein optional the temperature of the decoloring composition is selected ≥ the glass-transition temperature $T_g$ and below the decomposition temperature of the colored synthetic and/or non-synthetic polar-polymer material, preferably the temperature of the decoloring composition is selected > $T_g$ and ≤ the melting temperature $T_m$ or decomposition temperatur or heat distortion temperature of the colored synthetic and/or non-synthetic polar-polymer material. The decomposition temperatur may be suitable select if the polymer has no melting temperature. The decomposition temperature may be suitable select if the article that is decolorizied is intended for reuse.

Without being bond to a specific theory the inventors assume that the organic aromatic coloring agent may have the ability to migrate out of the colored synthetic and/or non-synthetic polar-polymer material and therefore a decolorization of the colored synthetic and/or non-synthetic polar-polymer material occurs.

In order to enable a migration as unhindered as possible, the organic aromatic coloring agent preferably has a rather planar structure and preferably comprises at least one free rotation center outside the planar structure. Further in case of ligands and/or remnants which may be spatially or sterically demanding, the ligands and/or remnants may be as freely movable as possible around a center of rotation. This may give the organic aromatic coloring agent the ability to adapt its shape to the environment given by the matrix of the synthetic and/or non-synthetic polar-polymer material. Preferably the organic aromatic coloring agent may not comprise a spiro-center and/or the organic aromatic coloring agent may not comprise a large moiety that is rotation-impaired. In this context a large moiety that is rotation impaired may mean that the molecular weight of this rotation impaired moiety is about 350 g/mol +/-10%.

Preferably the organic aromatic coloring agent is not covalently bond to the synthetic and/or non-synthetic polar-polymer material. Therefore, the organic aromatic coloring agent may not be a reactive dye.

More preferably the organic aromatic coloring agent may be essentially homogenously distributed in the colored part or layer of the synthetic and/or non-synthetic polar-polymer material.

The wording "organic aromatic coloring agent" may be essentially homogenously distributed in the colored part or layer of the synthetic and/or non-synthetic polar-polymer material" means that for the eye of a human being the colored outer surface or the colored part or the colored layer of the synthetic and/or non-synthetic polar-polymer material appear uniformly colored without color variations.

<u>Decoloring composition</u>

To assist the decolorization and/or migration process the decoloring composition is exposed to the colored synthetic and/or non-synthetic polar-polymer material. The decoloring composition may have an enhanced interaction with the synthetic and/or non-synthetic polar-polymer material and therefore it is likely that the dye or dye mixture also called coloring agent migrates out of the synthetic and/or non-synthetic polar-polymer material. Preferably the decoloring composition used for decolorization is free or only comprises traces of a dye or dye mixture. The decoloring composition may be in a solid or in a liquid state at 23° C. According to one embodiment the decoloring composition is liquid at about ≥ 23 °C and ≤ 200 °C. According to one embodiment the decoloring composition is a mixture of liquids not forming a homogeneous mixture when added together.

As already mentioned the decolorization process may be based on the migration of the organic aromatic coloring agent out of the colored synthetic and/or non-synthetic polar-polymer material, and based on the improved solubility of the coloring agent in the added decoloring composition.

With respect to the decoloring composition it may be advantageous to select the decoloring composition from the group comprising at least one aromatic carbonic acid ester, at least one reducing agent or at least one oxidizing agent, and at least one alkaline agent. According to another embodiment the decoloring composition it may be advantageous to select the decoloring composition from the group comprising at least one aromatic carbonic acid ester, at least one reducing agent, a solvent and at least one alkaline agent. Preferably the solvent is a polar liquid at 23° C. It can be preferred that the solvent is the main component of the decoloring composition.

The decoloring composition may comprises ≥ 90 wt.-% to less than 100 wt.-%, preferably ≥ 93 wt.-% to ≤ 99 wt.-%, and more preferred ≥ 93 wt.-% to ≤ 97 wt.-% at least one solvent or a solvent mixture, based on the total weight of the decoloring agent.

<u>Aromatic carbonic esters</u>

Aromatic carbonic esters of the decoloring composition that can be suitable used may be selected from the group comprising benzoic acid benzyl esters, naphthalic acid benzyl esters, phthalic acid benzyl esters and/or isophthalic

acid benzyl esters, mixed aromatic aliphatic esters comprising benzyl butyl phthalates, and aliphatic esters comprising benzoic acid butyl esters, phthalic acid dibutyl esters, and/or isophthalic acid dibutyl esters; and preferably benzoic acid benzyl ester.

The aromatic carbonic ester can be used in an amount of about ≥ 0.001 wt.-% to about ≤ 5 wt.-%, preferably of about ≥ 0.01 wt.-% to about ≤ 3 wt.-%, further preferred of about ≥ 0.05 wt.-% to about ≤ 2 wt.-%, in addition preferred of about ≥ 0.1 wt.-% to about ≤ 1 wt.-%, and more preferred of about ≥ 0.2 wt.-% to about ≤ 0.3 wt.-%, based on the total weight of the decoloring composition.

Reducing agents

Reducing agents of the decoloring composition that can be suitable used may be selected from the group comprising:

- hydrogen in combination with precious metal catalyst, preferably H2/Ni, H2/Pd, H2/Pt, hydrides;
- complex hydrides, preferably sodium hydride NaH, lithium aluminum hydride LiAlH4, borohydride salts NaBH4;
- base metals, preferably Li, Na, Mg, Zn; low-valent nitrogen;
- phosphorus and sulphur compounds, preferably amidine sulfonic acid, formamidine sulphinic acid, hydrogen sulfide, sodium sulfide, $S^{2-}$, $Na_2S$, sulfites, $SO2^{-3}$, sodium sulfite, sulfurous acid, sulfur dioxide, thiosulphate, sodium dithionite, sodium bisulfite, $NaHSO_3$, formamidine sulfonic acid, zinc hydroxylmethansulfinate, sodium hydroxy methane sulfinate, thiourea dioxide, sulfonic acid and its derivatives, borohydride salts, sodium hydroxide, sodium carbonate, sodium bicarbonate, sodium oxide, and mixtures of sodium hydroxide and calcium oxide, sulfinic acid derivatives, borohydrides, REDULIT GIN;
- sulfinic acid and sulfinic acid derivates, preferably aminoimino methansulfinic acid;
- glucose mixtures with dispersants; and
- more preferred formamidine sulphinic acid.

The amount of reducing agent is adopted to the amount of synthetic and/or non-synthetic polar-polymer material to be decolourised and the amount of colour in the colored synthetic and/or non-synthetic polar-polymer material to be decolourised. The reducing agent .can be used in an amount of about ≥ 0.001 wt.-% to about ≤ 15 wt.-%, preferably of about ≥ 0.01 wt.-% to about ≤ 10 wt.-%, further preferred of about ≥ 0.05 wt.-% to about ≤ 5 wt.-%, in addition preferred of about ≥ 0.1 wt.-% to about ≤ 1 wt.-%, and more preferred of about ≥ 0.2 wt.-% to about ≤ 0.5 wt.-%, based on the total weight of the decoloring composition.

Alkaline agents

Alkaline agents of the decoloring composition that can be suitably used may be selected from the group comprising alkaline hydroxide or alkaline earth hydroxide, alkali and alkaline earth carbonates, alkaline earth hydrogen carbonates and other inorganic bases of the 1st to 3rd main groups of the periodic table; preferably NaOH and/or KOH and more preferred NaOH.

Alkaline agents such as organic bases can be suitably used. Organic bases that can be suitably used may be selected from the group comprising ammonia and/or triethyl amine.

The alkaline agent can be used in an amount of about ≥ 0 wt.-% to about ≤ 15 wt.-%, preferably of about ≥ 0.001 wt.-% to about ≤ 15 wt.-%, preferably of about ≥ 0.01 wt.-% to about ≤ 10 wt.-%, further preferred of about ≥ 0.05 wt.-% to about ≤ 5 wt.-%, in addition preferred of about ≥ 0.1 wt.-% to about ≤ 1 wt.-%, and more preferred of about ≥ 0.2 wt.-% to about ≤ 0.3 wt.-%, based on the total weight of the decoloring composition.

Aromatic hydrocarbons

The decoloring composition comprises in addition at least one aromatic hydrocarbon. Aromatic hydrocarbons of the decoloring composition that can be used may be selected from the group comprising $C_1$ to $C_5$ - alkyl substituted benzene, $C_3$ - alkyl substituted benzene, 1,3,5-trimethylbenzene, 1-ethyl-4-methylbenzene, prop-1-en-2-ylbenzene, propan-2-ylbenzene, propyl benzene, and more preferred $C_3$ -alkyl substituted benzene.

The aromatic hydrocarbons can be used in an amount of about ≥ 0.001 wt.-% to about ≤ 15 wt.-%, preferably of about ≥ 0.01 wt.-% to about ≤ 10 wt.-%, further preferred of about ≥ 0.05 wt.-% to about ≤ 5 wt.-%, in addition preferred of about ≥ 0.1 wt.-% to about ≤ 1 wt.-%, and more preferred of about ≥ 0.2 wt.-% to about ≤ 0.3 wt.-%, based on the total weight of the decoloring composition.

Tensides

The decoloring composition comprises in addition at least one tenside. Tensides of the decoloring composition that can be used may be selected from the group comprising cationic-tensides, anionic-tensides, betaine-tenside, non-ionic tenside. The non-ionic tenside can be preferably selected from the group of aromatic esters and hydrocarbons, aromatic and nonaromatic carboxylic acid esters, ethyl acrylate, fatty acid esters, alkoxylated, preferably ethoxylated or ethoxylated and propoxylated fatty acid esters, alkoxylated, preferably ethoxylated or ethoxylated and propoxylated fatty acids, poly oxyethylated compounds derived from sorbitol and oleic acid, polysorbate 20, polysorbate 40, polysorbate 60, polysorbate 65, polysorbate 80, polymers that are fatty acid-based with a non-ionic group per molecule, acrylate-copolymers, acrylate/styrene copolymers, fatty acid derivatives, polyalkoxylate, and preferably 2-(2-butoxy-ethoxy)ethanol and in particular preferred Isotridecanolethoxylate.

According to one embodiment at least two tensides can be used. Preferably the two tensides are selected from the group of non-ionic tensides.

The tenside, in particular the non-ionic tenside, can be used in an amount of about ≥ 0 wt.-% to about ≤ 15 wt.-%, preferably of about ≥ 0.05 wt.-% to about ≤ 10 wt.-%, further preferred of about ≥ 0.075 wt.-% to about ≤ 5 wt.-%, in addition preferred of about ≥ 0.1 wt.-% to about ≤ 1 wt.-%, and more preferred of about ≥ 0.2 wt.-% to about ≤ 0.3 wt.-%, based on the total weight of the decoloring composition.

The at least two tenside, in particular the at least two tenside non-ionic tenside, can be used in an amount of about ≥ 0 wt.-% to about ≤ 15 wt.-%, preferably of about ≥ 0.05 wt.-% to about ≤ 10 wt.-%, further preferred of about ≥ 0.075 wt.-% to about ≤ 5 wt.-%, in addition preferred of about ≥ 0.1 wt.-% to about ≤ 1 wt.-%, and more preferred of about ≥ 0.2 wt.-% to about ≤ 0.3 wt.-%, based on the total weight of the decoloring composition.

Alkyl benzenesulfonic acids

The decoloring composition comprises in addition at least one alkyl benzene sulfonic acid. Alkyl benzenesulfonic acids of the decoloring composition that can be used may be selected from the group comprising alkyl benzene sulfonic acid, alkyl naphthalic sulfonic acid, alkyl phthalic sulfonic acid and/or isophthalic sulfonic acid, and preferably a $C_9$-$C_{13}$-alkyl benzene sulfonic acid.

The alkyl benzene sulfonic acid can be used in an amount of about ≥ 0 wt.-% to about ≤ 15 wt.-%, preferably of about ≥ 0.05 wt.-% to about ≤ 10 wt.-%, further preferred of about ≥ 0.075 wt.-% to about ≤ 5 wt.-%, in addition preferred of about ≥ 0.1 wt.-% to about ≤ 1 wt.-%, and more preferred of about ≥ 0.2 wt.-% to about ≤ 0.3 wt.-%, based on the total weight of the decoloring composition.

Solvent

The decoloring composition comprises in addition as a main component at least one solvent or a solvent mixture. The solvent can be a polar and/or non-polar solvent that is a liquid at 23° C.

The polar and/or non-polar solvent may enhance the decolorization process. According to a preferred embodiment the polar solvent may be liquid at about 23 °C and may comprises at least one polar solvent or a mixture of polar solvents, wherein the polar solvent is a solvent or solvent mixture having a dipole, and is preferably selected from the group comprising water, and/or at least one polar organic solvent; wherein further preferred the polar solvent is a mixture of liquids forming a homogeneous mixture when added together, for example water/ethanol, wherein also preferred the polar solvent is a mixture of liquids not forming a homogeneous mixture when added together, for example water/butylacetate - the coloring agent enriches in the water phase and can be separated therefrom by known techniques. Using a polar solvent that is liquid at about 23 °C in the decolorization process may facilitate decolorization since liquid solvents may be easy to handle. Preferably water may be used. Water may have the advantageous that it may be inexpensive and environmental friendly.

The polar solvent preferably has a dipole moment, more preferably an electric dipole moment. The dipole moments may be due to a non-uniform distribution of positive and negative charges on the various atoms. The polar solvent may have a permanent dipole, an instantaneous dipole and/or an induced dipole. More preferably it may have a permanent dipole.

It may be advantageous to use a mixture of polar solvents. It may be also possible to use different polar solvents including organic polar solvents that may not form a homogenous mixture. The mixture of solvents can be a homogenous mixture, an emulsion or showing phase separation.

According to the above and according to a preferred embodiment the polar organic solvent or polar organic solvent mixture may be selected from the group $C_1$ to $C_6$ - alcohol, preferably ethanol and isopropanol, glycols such as diethylene glycol and its oligomers and ethers, $C_3$ to $C_6$ - ketone, preferably acetone, $C_2$ to $C_6$ - aldehyde, $C_1$ to $C_6$ - carboxylic acid and their derivatives such as acid chlorides or acid amides, other polar aromatic solvents liquid at 23 °C,

preferably dimethyl sulfoxide DMSO, dimethylformamide (DMF), benzylic alcohols such as benzyl alcohol, linear or cyclic aliphatic ethers, preferably diethyl ether, diisopropyl ether, dibutyl ether, tetrahydrofuran, esters such as methyl acetate, ethyl acetate, butyl acetate, benzyl benzoate, halogenated solvents such as dichloromethane or trichloromethane or benzyl chloride.

The decoloring composition may comprises as a solvent or in a solvent mixture at least one alcohol. Alcohols of the decoloring composition that can be suitable used may be selected from the group comprising $C_1$ to $C_{15}$ - alcohol, preferably ethanol, isopropanol, propanol, butanol, pentanol, hexanol, heptanol, octanol, nonanol, decanol, undecanol, dodecanol, tridecanol, tetradecanol, pentadecanol and its isomeres, glycols, glycols such as diethylene glycol and its oligomers, further C3 to C15 diols such as propanediol, butanediol or pentanediol or triols such as glycerol, more preferred $C_3$ to $C_{15}$ - alcohols, and furthermore preferred $C_9$ to $C_{12}$ - alcohols. Aromatic alcohols like benzyl alcohol are also suitable.

The alcohol can be used as a solvent or added as a part of a solvent mixture in an amount of about ≥ 0 wt.-% to about ≤ 100 wt.-%, preferably of about ≥ 1 wt.-% to about ≤ 70 wt.-%, further preferred of about ≥ 5 wt.-% to about ≤ 60 wt.-%, in addition preferred of about ≥ 10 wt.-% to about ≤ 50 wt.-%, and more preferred of about ≥ 20 wt.-% to about ≤ 30 wt.-%, based on the total weight of the decoloring composition.

The decoloring composition may comprises ≥ 75 wt.-% to less than 100 wt.-%, preferably ≥ 90 wt.-% to ≤ 99 wt.-%, and more preferred ≥ 93 wt.-% to ≤ 97 wt.-% solvent or solvent mixture, preferably water, or a mixture of water and at least one alcohol, based on the total weight of the decoloring agent.

Solvent additives

The decoloring composition comprises in addition at least one solvent additive. Solvent additives of the decoloring composition that can be suitable may be selected from the group comprising anorganic acids, preferably sulfonic acid, $C_3$ to $C_6$ - ketone, preferably acetone, $C_2$ to $C_6$ - aldehyde, $C_1$ to $C_6$ - carboxylic acid and their derivatives such as acid chlorides or acid amides, polar aromatic solvents liquid at 23 °C, preferably DMSO, DMF, benzylic alcohols, linear or cyclic aliphatic ethers, preferably diethyl ether, di-iso propyl ether, di butyl ether, tetrahydrofuran, organic alkyl esters, esters such as methyl acetate, ethyl acetate, butyl acetate, benzyl benzoate, halogenated solvents such as dichloromethane, trichloromethane, oils like anise oil, camphor oil, essential oils and fragrance oils, spindle oil, cedarwood oil, cinnamon oil, citronella oil, peppermint oil, pine oil, lemon oil, fuel oil, mineral oil, polyester resins and polyester softeners.

The decoloring composition may also comprise oils like anise oil, camphor oil, essential oils and fragrance oils, spindle oil, cedarwood oil, cinnamon oil, citronella oil, peppermint oil, pine oil, lemon oil, fuel oil, mineral oil but also polyester resins and polyester softeners. However, it can be preferred that the main component of the decoloring composition is a polar component.

The solvent additives can be used in an amount of about ≥ 0 wt.-% to about ≤ 15 wt.-%, preferably of about ≥ 0.05 wt.-% to about ≤ 10 wt.-%, further preferred of about ≥ 0.075 wt.-% to about ≤ 5 wt.-%, in addition preferred of about ≥ 0.1 wt.-% to about ≤ 1 wt.-%, and more preferred of about ≥ 0.2 wt.-% to about ≤ 0.3 wt.-%, based on the total weight of the decoloring composition.

Polar

Polar in this context may mean that the compounds show an enhanced polarity compared to a compound that exclusively consist of C-atoms and H-atoms. Preferably the synthetic and/or non-synthetic polar-polymer having a Mw ≥ 1000 g/mol, preferably the synthetic and/or non-synthetic polar-polymer having a Mw ≥ 1000 g/mol and ≤ 10,000,000 g/mol or having a Mw ≥ 1000 g/mol and ≤ 100,000,000 g/mol, the synthetic and/or non-synthetic polar-oligomer having a Mw ≥ 600 g/mol and < 1000 g/mol, and the polar-additive having a Mw ≥ 70 and < 600 g/mol may each comprise at least ≥ 5 wt.-% of heteroatoms, wherein the weight % is calculated based on the individual weights of the synthetic and/or non-synthetic polar-polymer, the synthetic and/or non-synthetic polar-oligomer, and the synthetic and/or non-synthetic polar-additive. In this context a heteroatom may be any atom excluding C-atoms and H-atoms. Preferably, the heteroatom may be selected from the group comprising: N, O, F, Cl, Br, I, S, and P. Furthermore, preferably the synthetic and/or non-synthetic polar-polymer having a Mw ≥ 1000 g/mol, the synthetic and/or non-synthetic polar-oligomer having a Mw ≥ 600 g/mol and < 1000 g/mol, and the polar-additive having a Mw ≥ 70 and < 600 g/mol may each comprise at least ≥ 5 wt.-% and preferably < 70 wt.-% of O-atoms.

According to the above, the at least one synthetic and/or non-synthetic non-polar-polymer having a Mw of about ≥ 1000 g/mol, preferably the synthetic and/or non-synthetic polar-polymer having a Mw ≥ 1000 g/mol and ≤ 10,000,000 g/mol or having a Mw ≥ 1000 g/mol and ≤ 100,000,000 g/mol, may preferably comprise < 5 wt.-% of heteroatoms, wherein the weight % is calculated based on the weight of the synthetic and/or non-synthetic non-polar-polymer.

Temperature

During the decoloring process the colored synthetic and/or non-synthetic polar-polymer material is exposed to the decoloring composition, wherein the decoloring composition comprises at least one aromatic carbonic acid ester, at least one reducing agent or at least one oxidizing agent, at least one alkaline agent and optional a solvent, at a temperature in the range of about ≥ 80 °C to ≤ about 200 °C, preferably about ≥ 100 °C to ≤ about 140 °C. As a result of this process the colored synthetic and/or non-synthetic polar-polymer material is decolorized.

According to a preferred embodiment the colored synthetic and/or non-synthetic polar-polymer material may be decolorized by exposing the colored synthetic and/or non-synthetic polar-polymer material to the decoloring composition comprising at least one aromatic carbonic acid ester, at least one reducing agent or at least one oxidizing agent, at least one alkaline agent and optional a solvent, at a temperature of about ≥ 80 °C to about ≤ 200 °C, preferably about ≥ 100 °C to ≤ about 140 °C, further preferred about ≥ 90 °C to ≤ about 120 °C , wherein the temperature of the polar solvent is selected ≥ the glass-transition temperature $T_g$ and below the decomposition temperature of the colored synthetic and/or non-synthetic polar-polymer material, preferably the temperature of the decoloring composition is selected ≥ $T_g$ and ≤ the melting temperature $T_m$ of the colored synthetic and/or non-synthetic polar-polymer material.

The decolorization process may be assisted by elevated temperature. However, preferably the temperature may be lower than the decomposition temperature of the colored synthetic and/or non-synthetic polar-polymer material and more preferably lower than or equal to the melting temperature of the colored synthetic and/or non-synthetic polar-polymer material, if the colored synthetic and/or non-synthetic polar-polymer material has a melting temperature. By meeting these upper temperature requirements the decolorization process may not have an influence on the physical properties of the synthetic and/or non-synthetic polar-polymer material. Furthermore, to enhance and/or accelerate the decolorization process, preferably the temperature may be equal to or higher than the glass transition temperature or the colored synthetic and/or non-synthetic polar-polymer material. Most preferably the temperature is selected in the range of the melting temperature of the colored synthetic and/or non-synthetic polar-polymer material, if the colored synthetic and/or non-synthetic polar-polymer material has a melting temperature. In this context in the range of the melting temperature may mean the temperature range $T_m$ +/- 20 °C.

The glass transition may be the gradual and reversible transition in amorphous regions of the colored synthetic and/or non-synthetic polar-polymer material from a hard and relatively brittle state into a viscous or rubbery state as the temperature is increased. The glass transition temperature $T_g$ of the colored synthetic and/or non-synthetic polar-polymer material may be determined by differential scanning calorimetry (DSC), which is a thermo analytical technique in which the difference in the amount of heat required to increase the temperature of a sample and reference is measured as a function of temperature.

In polymers having semi-crystalline or crystalline phases, at the melting temperature $T_m$, the crystalline phases may become amorphous. The colored synthetic and/or non-synthetic polar polymer material may change from a thermoelastic to a thermoplastic state. This transition may be associated with a loss of mechanical properties.

The glass transition temperature Tg and the melting temperature Tm of the colored synthetic and/or non-synthetic polar-polymer material may be determined according to the following standards: DIN 51007(Thermal Analysis - Differential Thermal Analysis and Differential Scanning Calorimetry - General Principles), ASTM E 474, ASTM D 3418, DIN EN ISO 11357-1 (Plastics - Differential Scanning Thermal Analysis Part 1: General principles. (2008)), ISO 11357-2 (Plastics - Differential Scanning Calorimetry Part 2: Determination of the glass transition temperature. (1999)), ISO / DIS 11357-3(Plastics - Differential Scanning Calorimetry Part 3: Determination of the melting and crystallization temperature and the melting and crystallization enthalpy. (2009)), ISO 11357-4(Plastics - Differential Scanning Thermal Analysis (DSC) Part 4: Determination of specific heat capacity. (2005)).

The glass transition temperature Tg and/or the melting temperature Tm of the colored synthetic and/or non-synthetic polar-polymer material may be determined using a Mettler Toledo DSC 3+ differential calorimeter, a sample amount of 10 +/- 1 mg, nitrogen as purge gas, and the following settings: 1. Heating: -40 °C to 280 °C with 20 °C/min, Hold: 3 minutes at 200 °C, Cooling: 280 °C to -40 °C at 10 °C/min, Hold: 5 minutes at -20 °C, 2. Heating: -40 °C to 300 °C at 20 °C/min.

Further it may be preferred that the temperature of the decoloring composition is adjusted according to specific properties of the colored synthetic and/or non-synthetic polar-polymer material. For example the temperature of the decoloring composition exposed to the outer of the colored synthetic and/or non-synthetic polar-polymer material may be adjusted such that the temperature of decoloring composition is higher or same than the glass-transition temperature $T_g$ of the colored synthetic and/or non-synthetic polar-polymer material; and/or the decoloring composition exposing the colored synthetic and/or non-synthetic polar-polymer material may have a temperature lower than the heat deflection of the colored synthetic and/or non-synthetic polar-polymer material. This may have the advantages that distortion or deforming of the colored synthetic and/or non-synthetic polar-polymer material may be avoided. Further, when colored plastic articles are decolorized in such temperature range, there is no significant change in the properties of the plastic article, especially its shape and dimensions.

The heat deflection temperature also called heat distortion temperature may be the temperature at which synthetic polar-polymer material deforms under a specified load. It may be determined by the following test procedure outlined in ASTM D648. The test specimen is loaded in three-point bending in the edgewise direction. The outer fiber stress used for testing is either 0.455 MPa or 1.82 MPa, and the temperature is increased at 2 °C/min until the specimen deflects 0.25 mm.

Alternative the heat deflection temperature also called heat distortion temperature (HDT) may be measured according to DIN EN ISO 75-1 to 3. In this test, the test specimen is loaded according to the three-point bending principle, which means that the bending moment is not constant over the length of the test specimen, but rather increases from the support points to the point of application of the individual load. For plastics and hard rubber according to DIN EN ISO 75-2, the individual load is dimensioned so that a maximum bending stress of 1.80 MPa (method A), 0.45 MPa (method B) or 8.0 MPa (method C) is present. The heating takes place at a heating rate of 2 °C/min, with air or silicone oil usually being used as the heat carrier.

Time

According to a preferred embodiment the colored synthetic and/or non-synthetic polar-polymer material may be decolorized by exposing the colored synthetic and/or non-synthetic polar-polymer material to the decoloring composition, wherein at least 90 wt.-% of the organic aromatic coloring agent having a molecular weight Mw in the range of about ≥ 230 g/mol to about ≤ 750 g/mol of the colored synthetic and/or non-synthetic polar-polymer material is removed, when the colored synthetic and/or non-synthetic polar-polymer material is exposed to the decoloring composition at a temperature of about 80° C to 120° C for about ≥ 1 minute to about ≤ 60 minutes, preferably for about ≥ 5 minutes to about ≤ 50 minutes, in addition preferred for about ≥ 10 minutes to about ≤ 40 minutes, also preferred for about ≥ 15 minutes to about ≤ 35 minutes, and furthermore preferred for about ≥ 20 minutes to about ≤ 30 minutes, more preferred for about ≥ 15 minutes to about ≤ 45 minutes and most preferred for about ≥ 10 minutes to about ≤ 30 minutes.

According to a further preferred embodiment the colored synthetic and/or non-synthetic polar-polymer material may be decolorized by exposing the colored synthetic and/or non-synthetic polar-polymer material to the decoloring composition, wherein at least 90 wt.-% of the organic aromatic coloring agent having a molecular weight Mw in the range of about ≥ 230 g/mol to about ≤ 750 g/mol of the colored synthetic and/or non-synthetic polar-polymer material is removed, when the colored synthetic and/or non-synthetic polar-polymer material is exposed to the decoloring composition at a temperature of about 80° C to 120° C for about ≥ 1 minute to about ≤ 60 minutes, preferably for about ≥ 5 minutes to about ≤ 50 minutes, in addition preferred for about ≥ 10 minutes to about ≤ 40 minutes, also preferred for about ≥ 15 minutes to about ≤ 35 minutes, and furthermore preferred for about ≥ 20 minutes to about ≤ 30 minutes, more preferred for about ≥ 15 minutes to about ≤ 45 minutes and most preferred for about ≥ 10 minutes to about ≤ 30 minutes, wherein the thickness of the colored synthetic and/or non-synthetic polar-polymer material that is decolorized is about ≥ 10 μm and ≤ 1500 μm and preferably about ≥ 100 μm and ≤ 1000 μm.

According to a further preferred embodiment the colored synthetic and/or non-synthetic polar-polymer material may be decolorized by exposing the colored synthetic and/or non-synthetic polar-polymer material to the decoloring composition, wherein at least 90 wt.-% of the organic aromatic coloring agent having a molecular weight Mw in the range of about ≥ 230 g/mol to about ≤ 750 g/mol of the colored synthetic and/or non-synthetic polar-polymer material is removed, when the colored synthetic and/or non-synthetic polar-polymer material is exposed to the decoloring composition at a temperature of about 80° C to 120° C for about ≥ 15 seconds to about ≤ 240 minutes, preferably about ≥ 1 minute to about ≤ 180 minutes, further preferred for about ≥ 5 minutes to about ≤ 60 minutes, and also preferred for about ≥ 10 minutes to about ≤ 20 minutes, wherein the thickness of the colored synthetic and/or non-synthetic polar-polymer material that is decolorized is about ≥ 10 μm and ≤ 1500 μm and preferably about ≥ 100 μm and ≤ 1000 μm. The decolorization process may reach an equilibrium during the given time intervals.

pH

To enhance the decolorization process the decoloring composition may be adjusted to a pH in the range of about ≥ 2 to about ≤ 14, preferably about ≥ 7 to about ≤ 13, about ≥ 8 to about ≤ 12, wherein the pH is adjusted preferably by adding an acid or basic agent. The pH can be also selected in the range of about ≥ 2.5 to about ≤ 11.5, preferably about ≥ 2.9 to about ≤ 11, about ≥ 3 to about ≤ 9, or about ≥ 5 to about ≤ 10.5. For example the pH may be adjusted by adding acetic acid as acid agent or sodium hydroxide as basic agent.

However, more preferred is that decoloring composition is adjusted to a pH in the range of about ≥ 7 to about ≤ 14, preferably about ≥ 7.5 to about ≤ 13.5, further preferred about ≥ 8 to about ≤ 13, in addition preferred ≥ 8.5 to about ≤ 12.5, more preferred ≥ 9 to about ≤ 12 and most preferred ≥ 9.5 to about ≤ 11.5 or ≥ 10 to about ≤ 11.

A basic pH accelerates the decolorization process significant compared with an acid pH.

Aromatic coloring agent

In order to facilitate the migration of the organic aromatic coloring agent out of the colored synthetic and/or non-synthetic polar-polymer material it may be advantageous that the organic aromatic coloring agent has a specific molecular weight. Concerning the organic aromatic coloring agent and according to a preferred embodiment the organic aromatic coloring agent may have a molecular weight Mw in the range of ≥ 230 g/mol to ≤ 750 g/mol, preferably the organic aromatic coloring agent has a molecular weight Mw in the range of > 270 g/mol to ≤ 450 g/mol, and more preferably the organic aromatic coloring agent has a molecular weight Mw in the range of ≥ 285 g/mol to ≤ 400 g/mol.

Furthermore, the solubility of the organic aromatic coloring agent in water may be low. According to a preferred embodiment the organic aromatic coloring agent may have a solubility in water at 23 °C of ≤ 0.1 g/l and > 0 g/l, preferably ≤ 0.01 g/l and > 0 g/l, more preferably ≤ 0.001 g/l and > 0 g/l.

The organic aromatic coloring agent may comprise at least 2 to 6 aromatic six-membered rings, or at least 3 to 5 aromatic six-membered rings and at least 1 to 4 five-membered rings. Furthermore, the aromatic coloring agent may have at least 2 to 6 aromatic six-membered rings and/or the organic aromatic coloring agent may comprises at least on heteroatom selected from N, O, S, Br.

Preferably the organic aromatic coloring agent is selected from the group comprising the following chemical formulas A1 to A10 according to table 1:

Table 1

| | |
|---|---|
| Chemical formula A1 | 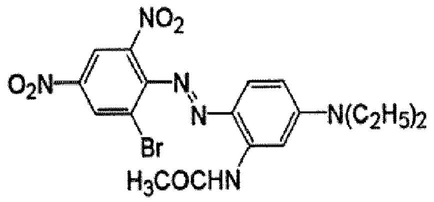 |
| Chemical formula A2 | 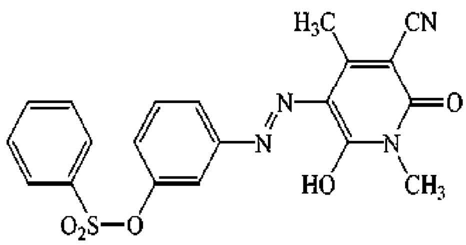 |
| Chemical formula A3 | 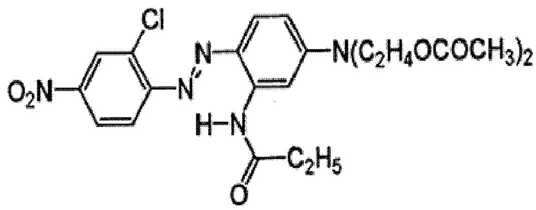 |
| Chemical formula A4 | 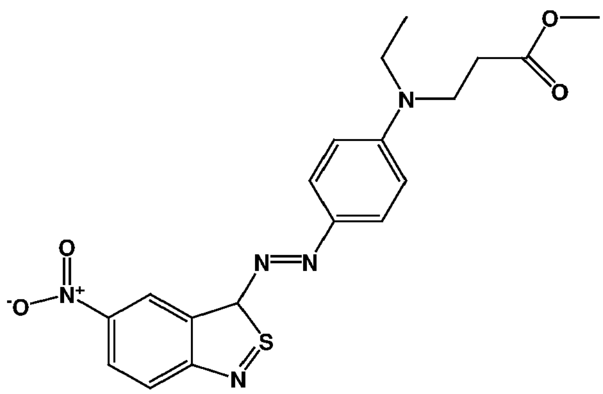 |

(continued)

| | |
|---|---|
| Chemical formula A5 | 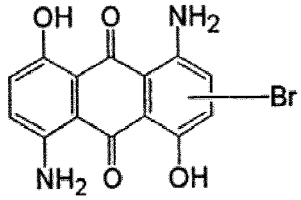 |
| Chemical formula A6 | 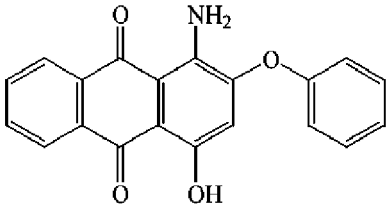 |
| Chemical formula A7 | 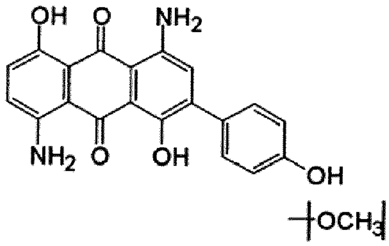 |
| Chemical formula A8 | 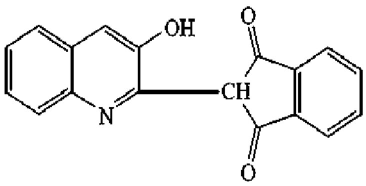 |
| Chemical formula A9 | 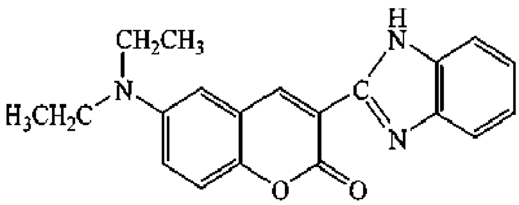 |
| Chemical formula A10 | 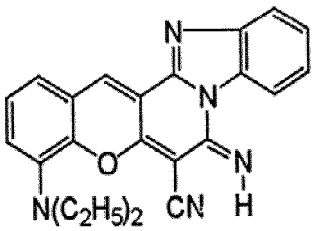 |
| Chemical formula A11 | 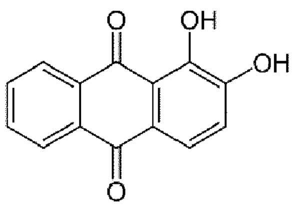 |

(continued)

| | |
|---|---|
| Chemical formula A12 | 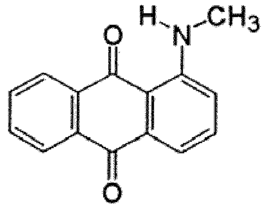 |

Regarding the chemical formula A7, the methoxy group -[OCH3] may be an alternative for the hydroxyl group -[OH] on the aromatic moiety, that is not part of the anthraquinone ring system.

Preferably the organic aromatic coloring agent is selected from the group comprising the coloring agents known under the trademark BEMACRON S/SE/E from CHT Germany GmbH, or from Dystar Pte Ltd. Preferably the organic aromatic coloring agent is selected from the group comprising BEMACRON Yellow S-6GF, BEMACRON Yellow S-4g, BEMACRON Yellow Brown S-2RF1, BEMACRON Orange S-g, BEMACRON Scarlet S-gFl, BEMACRON Scarlet S-BWF1, BEMACRON Rubine S-2GFL, BEMACRON Violet S-3R1, BEMACRON Violet S-B1F, BEMACRON Blue S-Bgl, BEMACRON Blue S-BB, BEMACRON Turquoise S-gF, BEMACRON Navy S-2gl, BEMACRON Navy S-31, BEMACRON Black S-31, BEMACRON Black S-T, BEMACRON Yellow SE-Rdl, BEMACRON Yellow SE-1F, BEMACRON Orange SE-Rdl, BEMACRON Red SE-4g, BEMACRON Pink SE-RE1, BEMACRON Red SE-3B, BEMACRON Red SE-Rdl, BEMACRON Blue SE-1F, BEMACRON Blue SE-Rdl, BEMACRON Navy SE-R1X, BEMACRON Black SE-R1X, BEMACRON Black SE-Rd2R, BEMACRON Yellow E-3gl, BEMACRON Red E-FB1, BEMACRON Blue E-FB1, and BEMACRON Black E-R.

More preferably the organic aromatic coloring agent is selected from the group comprising BEMACRON Black E-R, BEMACRON Yellow S-6GF, BEMACRON Rubine S-2GFL, BEMACRON Blue RS, BEMACRON Blue E-FBL 150, BEMACRON Red E-FBL, BEMACRON Blue S-BGL, BEMACRON Yellow E-3gl, BEMACRON Lumin. Yellow SEL-8G, and BEMACRON Lumin. Red SEL-G.

Preferably the aromatic coloring agent may not comprise a phthalocyanine.

Colored synthetic and/or non-synthetic polar-polymer material

The colored synthetic and/or non-synthetic polar-polymer material may have a density that is lower or greater than the density of the solvent, preferably the polar solvent. However the density of the colored synthetic and/or non-synthetic polar-polymer material may decrease by decoloring the colored synthetic and/or non-synthetic polar-polymer material below the density of the solvent, preferably the polar solvent. Therefore, the colored synthetic and/or non-synthetic polar-polymer material and/or the decolored synthetic and/or non-synthetic polar-polymer material floats on top of the solvent, preferably the polar solvent.

As already explained above the decolorization process is based on the migration of the organic aromatic coloring agent out of the colored synthetic and/or non-synthetic polar-polymer material, and the decolorization process is accelerated by adding the decoloring composition.

In order to further shift the equilibrium toward a decolorized synthetic and/or non-synthetic polar-polymer material and to enhance the migration of the organic aromatic coloring agent out of the colored synthetic and/or non-synthetic polar-polymer material it may be advantageous to remove the organic aromatic coloring agent during or after a decolorization step from the decoloring composition by means of filtration, absorption and/or adsorption, oxidation and/or reduction of the organic aromatic coloring agent. According to the above and according to a preferred embodiment the decoloring composition that is saturated by an organic aromatic coloring agent or comprises a higher concentration organic aromatic coloring agent may be at least partly or completely separated and replaced with decoloring composition that is free of the organic aromatic coloring agent having a molecular weight Mw in the range of about ≥ 230 g/mol to about ≤ 750 g/mol.

The decoloring composition that is free of the organic aromatic coloring agent may also be free of a dye or dye mixture, or only comprises traces of a dye or dye mixture.

According to one embodiment the colored synthetic and/or non-synthetic polar-polymer material may be first sorted by color and thereafter the colored synthetic and/or non-synthetic polar-polymer material sorted by color are each decolorized by the process according to the present invention. This may enables the reuse of different colored polar decoloring agents to be added to polymer material intended to be colorized.

The decoloring composition takes off the organic aromatic coloring agent during the decolorization of the colored synthetic and/or non-synthetic polar-polymer material. The than colored decoloring composition can be separated. According to a preferred embodiment the separated colored decoloring composition can be used to regain the organic aromatic coloring agent, which can be reused to color synthetic and/or non-synthetic polar-polymer material.

According to an embodiment, the dye or dye mixture of the colored synthetic and/or non-synthetic polar-polymer material that dissolves in the solvent, preferably the polar solvent, can in addition be destroyed by a chemical oxidation or reduction reaction. This shifts the equilibrium by destroying the dyes from the colored synthetic and/or non-synthetic polar-polymer material. Small amounts of the dye or dye mixture dissolve again in the decoloring composition solvent, preferably the decoloring composition polar solvent, which is then destroyed so that additional dye or dye mixture dissociate from the colored synthetic and/or non-synthetic polar-polymer material into the decoloring composition polar solvent.

A decoloring composition polar solvent is a decoloring composition that comprises at least one aromatic carbonic acid ester, at least one reducing agent or at least one oxidizing agent, at least one alkaline agent and at least one solvent, preferably a polar solvent.

According to a preferred embodiment the separated colored decoloring composition can be decolored, for example by a oxidizing reaction or reducing reaction. This would make the reuse of the decoloring composition possible.

According to a further embodiment the method for decolorizing a colored synthetic and/or non-synthetic polar-polymer material comprises in addition a step, wherein the colored decoloring composition is decolorized by:

- an oxidation process, preferably by exposing to at least one oxidation agent select from the group comprising of peroxide, peroxyacetic acid, hydrogen peroxide, sodium peroxodisulfate,, ozone, sodium percarbonate, sodium perborate, sodium percarbonate, m-nitro benzol sulfonate, $H_2SO_4$, $HNO_3$, oxygen-containing anions (oxo anions) of transition metals in high oxidation states such as permanganate $MnO_4^-$, $KMnO_4$, phosphate, oxygen difluoride fluorine, cryptone difluoride, dichromate $Cr_2O_7^{2-}$, metal ions such as $Ce_4^+$, noble metal ions such as those of silver and copper, anions of halo-oxygen acids such bromate $BrO_3^-$, halogens, such as fluorine, chlorine, bromine and iodine, hypochlorite, sodium hypochlorite, and/or potassium hypochlorite;
- a reduction process, preferably by exposing to at least one reduction agent select from the group comprising hydrides, H-, NaH, lithium aluminum hydride, sodium hydride, hydrogen sulfide, sodium sulfide, $S^{2-}$, $Na_2S$, sulfites, $SO2^{-3}$, sodium sulfite, sulfurous acid, sulfur dioxide, thiosulphate, sodium dithionite, sodium bisulfite, $NaHSO_3$, formamidine sulfinic acid, zinc hydroxymethansulfinate, sodium hydroxy methane sulfinate also known as rongalite, thiourea dioxide also knwon as thiox, sulfonic acid and its derivatives, borohydride salts, sodium hydroxide, sodium carbonate, sodium bicarbonate, sodium oxide, and mixtures of sodium hydroxide and calcium oxide, sulfinic acid derivatives, borohydrides and/or REDULIT GIN; and/or
- adsorption and/or absorption process, preferably by exposing to carbon black, zeolites.

According to a further embodiment the method for decolorizing a colored synthetic and/or non-synthetic polar-polymer material comprises after exposing the colored synthetic and/or non-synthetic polar-polymer material to the decoloring composition and additional step of further decolorizing the colored synthetic and/or non-synthetic polar-polymer material by:

- an oxidation process, preferably by exposing to at least one oxidation agent select from the group comprising of peroxide, peroxyacetic acid, hydrogen peroxide, sodium peroxo disulfate, ozone, sodium percarbonate, sodium perborate, sodium percarbonate, m-Nitrobenzolsulfonat, $H_2SO_4$, $HNO_3$, oxygen-containing anions (oxo anions) of transition metals in high oxidation states such as permanganate $MnO_4^-$, $KMnO_4$, phosphate, oxygen difluoride fluorine, cryptone difluoride, dichromate $Cr_2O_7^{2-}$, metal ions such as $Ce_4^+$, noble metal ions such as those of silver and copper, anions of halo-oxygen acids such bromate $BrO_3^-$, halogens, such as fluorine, chlorine, bromine and iodine, hypochlorite, sodium hypochlorite, and/or potassium hypochlorite;
- a reduction process, preferably by exposing to at least one reduction agent select from the group comprising hydrides, H-, NaH, lithium aluminum hydride, sodium hydride, hydrogen sulfide, sodium sulfide, $S^{2-}$, $Na_2S$, sulfites, $SO2^{-3}$, sodium sulfite, sulfurous acid, sulfur dioxide, thiosulphate, sodium dithionite, sodium bisulfite, $NaHSO_3$, formamidine sulfinic acid, zinc hydroxymethansulfinate, sodium hydroxymethanesulfinate also known as rongalite, thiourea dioxide also knwon as thiox, sulfonic acid and its derivatives, borohydride salts, sodium hydroxide, sodium carbonate, sodium bicarbonate, sodium oxide, and mixtures of sodium hydroxide and calcium oxide, sulfinic acid derivatives, borohydrides and/or REDULIT GIN; and/or
- adsorption and/or absorption process, preferably by exposing to carbon black, zeolites

According to a preferred embodiment the separated colored decoloring composition may be decolorized by:

- an oxidation process, preferably by exposing to at least one oxidation agent select from the group comprising of peroxide, peroxyacetic acid, hydrogen peroxide, sodium peroxo disulfate, ozone, sodium percarbonate, sodium

perborate, sodium percarbonate, m-nitro benzol sulfonate, $H_2SO_4$, $HNO_3$, oxygen-containing anions (oxo anions) of transition metals in high oxidation states such as permanganate $MnO_4^-$, $KMnO_4$, phosphate, oxygen difluoride fluorine, cryptone difluoride, dichromate $Cr_2O_7^{2-}$, metal ions such as $Ce_4^+$, noble metal ions such as those of silver and copper, anions of halo-oxygen acids such bromate $BrO_3^-$, halogens, such as fluorine, chlorine, bromine and iodine, hypochlorite, sodium hypochlorite, and/or potassium hypochlorite;

- a reduction process, preferably by exposing to at least one reduction agent select from the group comprising hydrides, H-, NaH, lithium aluminum hydride, sodium hydride, hydrogen sulfide, sodium sulfide, $S^{2-}$, $Na_2S$, sulfites, $SO2^{-3}$, sodium sulfite, sulfurous acid, sulfur dioxide, thiosulphate, sodium dithionite, sodium bisulfite, $NaHSO_3$, formamidine sulfinic acid, zinc hydroxymethansulfinate, sodium hydroxy methane sulfinate also known as rongalite, thiourea dioxide also known as thiox, sulfonic acid and its derivatives, borohydride salts, sodium hydroxide, sodium carbonate, sodium bicarbonate, sodium oxide, and mixtures of sodium hydroxide and calcium oxide, sulfinic acid derivatives, borohydrides and/or REDULIT GIN; and/or
- adsorption and/or absorption process, preferably by exposing to carbon black, zeolites.

It may also be possible to destroy the dye or dye mixture "also named organic aromatic coloring agent or color agent" in a pre-step and/or subsequent step, preferably in a subsequent step traces of the color that has remain in decolorized former colored synthetic and/or non-synthetic polar polymer material may be treated by an oxidation process, a reduction process and/or an adsorption and/or absorption process. It may be an advantage that after exposing the colored synthetic and/or non-synthetic polar-polymer material to the decoloring composition the method for decolorizing the synthetic and/or non-synthetic polar-polymer material further comprises in a subsequent step additional decolorizing the colored synthetic and/or non-synthetic polar-polymer material by:

- an oxidation process, preferably by exposing to at least one oxidation agent select from the group comprising of peroxide, peroxyacetic acid, hydrogen peroxide, sodium peroxo disulfate, ozone, sodium percarbonate, sodium perborate, sodium percarbonate, m-nitro benzol sulfonate, $H_2SO_4$, $HNO_3$, oxygen-containing anions (oxo anions) of transition metals in high oxidation states such as permanganate $MnO_4^-$, $KMnO_4$, phosphate, oxygen difluoride fluorine, cryptone difluoride, dichromate $Cr_2O_7^{2-}$, metal ions such as $Ce_4^+$, noble metal ions such as those of silver and copper, anions of halo-oxygen acids such bromate $BrO_3^-$, halogens, such as fluorine, chlorine, bromine and iodine, hypochlorite, sodium hypochlorite, and/or potassium hypochlorite;
- a reduction process, preferably by exposing to at least one reduction agent select from the group comprising hydrides, H-, NaH, lithium aluminum hydride, sodium hydride, hydrogen sulfide, sodium sulfide, $S^{2-}$, $Na_2S$, sulfites, $SO2^{-3}$, sodium sulfite, sulfurous acid, sulfur dioxide, thiosulphate, sodium dithionite, sodium bisulfite, $NaHSO_3$, formamidine sulfinic acid, zinc hydroxylmethansulfinate, sodium hydroxy methane sulfinate also known as rongalite, thiourea dioxide also known as thiox, sulfonic acid and its derivatives, borohydride salts, sodium hydroxide, sodium carbonate, sodium bicarbonate, sodium oxide, and mixtures of sodium hydroxide and calcium oxide, sulfinic acid derivatives, borohydrides and/or REDULIT GIN; and/or
- adsorption and/or absorption process, preferably by exposing to carbon black, zeolites.

REDULIT GIN is a liquid reducing agent mixture for the subsequent cleaning of polyester dyeings. Sodium hydroxide: alkali, serves as a reactant with the reducing agent and converts the reduced dye or dye mixture in the watersoluble Leukoküpenform. Soda: Especially for the hydrosulfite method, caustic soda is partially replaced by soda for better liquor stability.

Having such a subsequent additional step may increase the decolorization of the colored synthetic and/or non-synthetic polar-polymer material even further, if required.

After the decolorization process the amount of organic aromatic coloring agent in the formerly colored synthetic and/or non-synthetic polar-polymer material may be such low that the synthetic and/or non-synthetic polar-polymer material is considered colorless by visual inspection by a human eye.

According to a preferred embodiment the formerly colored synthetic and/or non-synthetic polar-polymer material after decolorization comprises about $\geq 0$ wt.-% to about $\leq 10$ wt.-%, preferably about $\geq 0.01$ wt.-% to about $\leq 5$ wt.-%, and further preferred about $\geq 0.1$ wt.-% to about $\leq 3$ wt.-% of organic aromatic coloring agent having a molecular weight Mw in the range of about $\geq 230$ g/mol to about $\leq 750$ g/mol, wherein the organic aromatic coloring agent is not a chemical reactive organic aromatic coloring agent that forms a chemical covalently bound, based on the total amount of said organic aromatic coloring agent in the colored synthetic and/or non-synthetic polar-polymer material before it is decolorized.

Before the decolorization process, the colored synthetic and/or non-synthetic polar-polymer material may comprise the organic aromatic coloring agent which gives the synthetic and/or non-synthetic polar-polymer material its specific color. The amount of organic aromatic coloring agent in the colored synthetic and/or non-synthetic polar-polymer material before the decolorization process may be as high that the colored synthetic and/or non-synthetic polar-polymer

material is considered colored by visual inspection.

According to a preferred embodiment the colored synthetic and/or non-synthetic polar-polymer material, before it is decolorized, comprises about 0.00001 wt.% to about ≤ 10 wt.%, preferably about 0.001 wt.% to about ≤ 5 wt.%, further preferred about 0.01 wt.% to about ≤ 3 wt.%, also preferred about 0.1 wt.% to about ≤ 2 wt.%, and in addition preferred about 0.25 wt.% to about ≤ 1 wt.%, and in addition preferred about 0.5 wt.% to about ≤ 1 wt.%, of an organic aromatic coloring agent, based on the total weight of the colored synthetic and/or non-synthetic polar-polymer material before it is decolorized.

Design of colored synthetic and/or non-synthetic polar-polymer material

The colored synthetic and/or non-synthetic polar-polymer material that is decolorized may have any form. Preferably the colored synthetic and/or non-synthetic polar-polymer material that is exposed to the polar solvent for decolorization may have the form of an article, flake, particle, powder or granulates. The article may be selected from the group comprising a sheet, a foil, a tube, a container, a part, a bottle, a non-woven fabric, and preferably the article may be selected from the group comprising computer face-plates, keyboards, bezels and cellular phones, color coded packaging and containers of all types, including ones for industrial components, residential and commercial lighting fixtures and components therefor, such as sheets, used in building and in construction, tableware, including plates, cups and eating utensils, small appliances and their components, optical and sun-wear lenses, fibers, woven fabric, and/or knitted fabric.

The article may be exposed to the decoloring composition without shredding the article into small pieces. This may have the advantageous that the article, for example a bottle may be used for the same purpose as before. Alternatively the colored synthetic and/or non-synthetic polar-polymer material that is exposed to the decoloring composition for decolorization may have the form of flakes, particles, powders or granulates. In other words it may be advantageous to break and/or shredder the article into smaller pieces such as flakes, particles, powders and/or granulates. Flakes, particles, powders and/or granulates may have the advantages that the surface to volume ratio may be higher. Therefore the decolorization process may be faster.

Furthermore, it may be easier to move and/or stir the flakes, particles, powders and/or granulates in the decoloring composition compared to the article.

In order to accelerate and/or improve the decolorization result it may be advantageous to use high pressure. Therefore according to a preferred embodiment the decolorization process of the colored synthetic and/or non-synthetic polar-polymer material may be carried out in a pressure vessel at a pressure above atmospheric pressure. A decolorization process of the colored synthetic and/or non-synthetic polar-polymer material may be carried out in a pressure vessel at a pressure above atmospheric pressure if the temperature of the decoloring composition is ≥ 80 °C.

In this context the term atmospheric pressure may refer to the standard atmosphere defined as a pressure of 101325 Pa (1.01325 bar).

Definitions of synthetic and/or non-synthetic polar-polymer

According to a preferred embodiment the synthetic and/or non-synthetic polar-polymer may comprise at least ≥ 5 wt.-% of heteroatoms, based on the total weight of the synthetic and/or non-synthetic polar-polymer, wherein a heteroatom is any atom excluding C-atoms and H-atoms. Preferably the heteroatom is selected from the group comprising N, O, F, Cl, Br, I, S, and P. For example considering a polyethylene terephthalate as synthetic and/or non-synthetic polar-polymer, the only heteroatom is oxygen. The wt.-% of oxygen in polyethylene terephthalate is around 33 wt.-%, which is above ≥ 5 wt.-%.

For example considering a poly-methyl methacrylate as synthetic and/or non-synthetic polar-polymer, the only heteroatom is oxygen. The wt.-% of oxygen in poly-methyl methacrylate is around 31 wt.-%, which is above ≥ 5 wt.-%.

Homopolymer, copolymer, terpolymer

A homopolymer may be a polymer that contains only a single type of repeat units. A copolymer may be a polymer that contains two types of repeat units. A terpolymer may be a polymer that contains three types of repeat units. With regard to the copolymer and the terpolymer the different types of repeat units may be organized along the backbone in different ways. There may be a controlled arrangement of the different repeat units, a statistical distribution of the different repeat units, and/or a longer sequence of one specific repeat unit alternating a longer sequence of a different specific repeat unit.

Preferably the two different types of repeat units in the copolymer or the cooligomer are organized in blocks such that the copolymer or the cooligomer is a block copolymer or block cooligomer. More preferably the first type of repeat unit is non-polar and preferably comprises only C and H atoms. Preferably the second type of repeat unit is polar

and comprises more than 5 wt.-% of heteroatoms based on the total weight of the repeat unit, wherein a heteroatom is any atom excluding C and H. These block copolymers and block oligomers may have the advantage that the migration of the organic aromatic coloring agent out of the synthetic and/or non-synthetic polar-polymer material is enhanced due to the formation of channels of interconnected polar polymers or oligomers in the synthetic and/or non-synthetic polar-polymer material. Therefore, using these block copolymers and/or block cooligomers may lead to a faster decoloring of the colored synthetic and/or non-synthetic polar-polymer material if contained in a non-polar matrix of PE or PP. These block copolymers and block oligomers may be produced by radical polymerization and or radical oligomerization and/or by using coordinative polymerization methods with metal complex catalysts. However polymethylmethacrylates shows a much more increased migration of the organic aromatic coloring agent than the above described block copolymers and block oligomers if contained in a non-polar matrix of PE or PP.

Synthetic and/or non-synthetic polar-polymer or mixture

The synthetic and/or non-synthetic polar-polymer or mixture thereof may be selected from the group comprising:

- polyacrylate with methyl (polymethyl acrylate), ethyl (polyethylacrylate), propyl (polypropylacrylate), or butyl (polybutylacrylate),
- polymethacrylate with methyl (polymethylmathacrylate), ethyl (polyethylmethacrylate), propyl (polypropylmethacrylate), or butyl (polybutylmethacrylate),
- copolymers of acrylic and methacrylic esters including, among others, *tert*-Butyl (meth)acrylate, pentyl(meth)acrylate and 2-ethylhexyl(meth)acrylate; (Meth)acrylates derived from unsaturated alcohols, preferably oleyl(meth)acrylate, 2-propynyl(meth)acrylate, allyl(meth)acrylate, vinyl(meth)acrylate;
- aryl(meth)acrylates polymers, preferably benzyl(meth)acrylate polymers or phenyl(meth)acrylate polymers, the aryl radicals each being unsubstituted or up to four times substituted;
- cycloalkyl(meth)acrylates polymers, preferably 3-vinylcyclohexyl(meth)acrylate polymers, bornyl (meth)acrylate polymers;
- hydroxyl alkyl (meth)acrylates polymers, preferably 3- hydroxypropyl (meth)acrylate polymers, 3,4- dihydroxy butyl(meth)acrylate polymers, 2-hydroxyethyl(meth)acrylate polymers, 2-hydroxypropyl(meth)acrylate polymers;
- glycol di(meth)acrylates polymers, preferably 1,4-butanediol (meth)acrylate polymers;
- (meth)acrylates of ether alcohols polymers, preferably tetrahydrofurfuryl (meth)acrylate polymers, vinyloxyethoxyethyl(meth)acrylate polymers;
- polymers of amides and nitriles of the (meth)acrylic acid, preferably N-(3-dimethylaminopropyl)(meth)acrylamide polymers, N-(diethylphosphono)(meth)acrylamide polymers, 1-methacryloylamido-2-methyl-2-propanol polymers;
- polymers of sulfur-containing methacrylates, preferably ethylsulfinylethyl(meth)acrylate, 4-thiocyanatobutyl(meth)acrylate polymers, ethylsulfonylethyl(meth)acrylate polymers, thiocyanatomethyl(meth)acrylate polymers, methylsulfinylmethyl(meth)acrylate polymers, bis((meth)acryloyloxyethyl) sulfide polymers;
- polyhydric (meth)acrylates, preferably trimethyloylpropanetri(meth)acrylate polymers;
- acrylonitrile polymers;
- vinyl ester polymers, preferably vinyl acetate polymers;
- styrene polymers, substituted styrenes polymers with an alkyl substituent in the side chain, preferably $\alpha$-methylstyrene and $\alpha$-ethylstyrene, substituted styrenes polymers with an alkyl substituent on the ring, preferably vinyl toluene, and *p*-methylstyrene, halogenated styrene polymers, preferably monochlorostyrene polymers, dichlorostyrene polymers, tribromostyrene polymers and tetrabromostyrene polymers;
- heterocyclic vinyl polymers, preferably 2-vinylpyridine polymers, 3-vinylpyridine polymers, 2-methyl-5-vinylpyridine polymers, 3-ethyl-4-vinylpyridine polymers, 2,3-dimethyl-5-vinylpyridine polymers, vinylpyrimidine polymers, vinylpiperidine polymers, 9-vinylcarbazole polymers, 3-vinylcarbazole polymers, 4-vinylcarbazole polymers, 1-vinylimidazole polymers, 2-methyl-1-vinylimidazole polymers, N-vinylpyrrolidone polymers, 2-vinylpyrrolidone polymers, N-vinylpyrrolidine polymers, 3-vinylpyrrolidine polymers, N-vinylcaprolactam polymers, N-vinylbutyrolactam polymers, vinyl oxolane polymers, vinyl furan polymers, vinyl thiophene polymers, vinylthiolane polymers, vinylthiazoles and hydrogenated vinylthiazoles polymers, vinyloxazoles and hydrogenated vinyloxazoles;
- polymers of vinyl and isoprenyl ethers;
- maleic acid polymers, preferably maleic anhydride polymers, methyl maleic anhydride polymers, maleimide polymers, methyl maleimide;
- copolymers of ethylene and propylene with acrylic esters, preferably polyethylen-block-co-polymethylmethacrylat, polypropylen-block-co-polymethylmethacrylat;
- aliphatic and/or aromatic polyesters, preferably, hydroxyl-functional dendritic polyesters, polycaprolactone, polyethylenterephthalate (PET), polytrimethylenterephthalat (PTT), polybutylenterephthalat (PBT), glycolized polyglycolterephthaltat (G-PET), amorphous polyethylenterephthalat (A-PET), polyesters of terephthalic acid, polyspiro-diol-terephthalate, polypentaspiroglycol-terephthalate (PSG), polycyclohexylenedimethylene-terephthalate (PCT), polyester based copolymer including a dicarboxylic acid-derived residue including a residue derived from an aromatic dicarboxylic acid and a diol-derived residue including a residue derived from 4-(hydroxymethyl)cyclohexylmethyl-4'-(hydroxymethyl)cyclohexane carboxylate, polyester based copolymer including a dicarboxylic acid-derived residue including a residue derived from an aromatic dicarboxylic acid and a diol-derived residue including a residue derived from 4,4-(oxybis(methylene)bis) cyclohexane methanol;

- polycarbonate (PC), 2,2-Bis-(4-hydroxyphenyl)-propan (Bisphenol A) polycarbonate, 2,2-Bis-(4-hydroxyphenyl)-butan (Bisphenol B) polycarbonate, 1,1-Bis(4-hydroxyphenyl)cyclohexan (Bisphenol C) polycarbonate, 2,2'-Methylendiphenol (Bisphenol F) polycarbonate, 2,2-Bis(3,5-dibrom-4-hydroxyphenyl)propan (Tetrabrombisphenol A) polycarbonate und 2,2-Bis(3,5-dimethyl-4-hydroxyphenyl)propan (Tetramethylbisphenol A) polycarbonate, bisphenol S polycarbonate, dihydroxydiphenylsulfid polycarbonate, tetramethylbisphenol A polycarbonate, 1,1-Bis(4-hydroxyphenyl)-3,3,5-trimethylcyclohexane (BPTMC) polycarbonate, 1,1,1-Tris(4-hydroxyphenyl)-ethane (THPE) polycarbonate;
- aliphatic polyamide (PA), preferably PA 6 based on polycaprolactam, PA 6.6 based on 6,6-hexamethylendiamin and adipic acid, PA 6.66 based on caprolactam, co-poymer of hexamethylendiamin and adipic acid, PA 66.610 based on hexamethylendiamin, copolymer of adipic acid and sebaic acid, PA 4.6, PA10, PA 12 and PA copolymers;
- polyurethane (PU),
- polar-copolymere, maleic anhydride-olefin copolymer;
- polyalkylenoxide, polyalkylene block copolymer, propylenoxide-ethylenoxide copolymer, (m)ethylene acrylate-maleic anhydride copolymer;
- polar-terpolymere, preferably reactive terpolymers of ethylene, acrylic ester and maleic anhydride, or ethylene, methacrylic ester and maleic anhydride, or ethylene, acrylic esters and glycidyl methacrylate, or ethylene, methacrylic esters and glycidyl methacrylate, or ethylene, (meth)acrylic esters and methyl (methyl(meth)acrylate), ethyl (ethy(meth)-acrylate), propyl (propyl(meth)acrylate), or butyl (butyl(meth)acrylate), polyamide, polyester-polyamides, or butyl (butyl(meth)acrylate), polyether-polyamide copolymers;
- polar polymer blends, preferably polycarbonate/polyethylenterephthalat blends (PC/PET blends), polycarbonate/polybutyleneterephthalate blends (PC/PBT blends), blends of polycyclohexylene dimethylene terephthalate copolymer, blends of poly(butylene-adipate-terephthalate);
- polyacrylnitril and polyacrylnitril-copolymers, preferably poly acrylonitrile butadiene styrene (ABS), poly styrene-acrylonitrile;
- polystyrene and polystyrene copolymers, preferably styrene/butadiene co-polymer (SBR), poly styrene-isoprene-styrene (SIS), poly(glycidyl methacrylate) grafted sulfonamide based polystyrene resin with tertiary amine;
- ethylene-vinyl acetate;
- polyether, preferably polyethyleneglycol, polyethyleneglycol with at least one fatty acid coupled to the polyethyleneglycol, terminating functional groups such NH2-terminated polyethers;
- functionalized polyacrylamide polymers, copolymers and terpolymers, preferably poly(2-acrylamido-2-aminopropionicacid) (polyAMPA), poly(2-acrylamido-2-amino propane sulfonic acid), poly(N-isopropylacylamide (polyPNIPAM); poly (amidoamine-co-acrylic acid) copolymer, poly(N,N-dimethylacrylamide-co-sodium acrylate), poly(acrylamide-co-sodium acrylate)/poly(ethylene glycol) semi-IPN, poly(acrylamide-co-sodium 4-styrenesulfonate), poly(acrylamide-co-sodium 4-styrenesulfonate)/poly(ethylene glycol) semi-IPN, poly(acrylamide-co-sodium methacrylate), poly(acrylamide-co-sodium methacrylate)/poly(ethylene glycol) semi-IPN, and/or poly(N-isopropylacrylamide-co-acrylic acid) andpoly(acrylamide-co-acrylic acid;
- poly(ether sulfones)/poly(ethyleneimine) (PES/PEI);
- polyvinylpyrrolidone, preferably poly(N-vinyl-2-pyrrolidone), poly(N-vinyl-2-pyrrolidone-co-acrylonitrile) treated with hydroxylamine-hydrochloride
- polyvinyl alcohol; and/or
- poly(1-naphthylamine)-camphorsulphonic acid.

Other synthetic and/or non-synthetic polar-polymer of amorphous copolyester that can be used are known under the tradename Akestra 90. The above named synthetic and/or non-synthetic polar-polymers may be used alone or in an admixture of two or more.

With regard to hydroxyl-functional dendritic polyesters that can be suitable used as a polar polymers, these molecules may be produced using polyalcohol cores, hydroxy acids and technology based on captive materials. The dendritic structures may be formed by polymerization of the particular core and 2,2-dimethylol propionic acid (Bis-MPA). The base products that may be obtained are hydroxyl-functional dendritic polyesters. They may be fully aliphatic and may consist only of tertiary ester bonds. They may provide excellent thermal and chemical resistance. Extensive branching also improves reactivity, lowers viscosity and results in balanced mechanical properties. The hydroxyl-functional dendritic polyesters may be known under the trade name Boltorn®. The following dendritic polymers may be used as non-limiting

examples: Boltorn® H20 16 terminal hydroxyl groups, nominal molecular weight of 1750 g/mol, Boltorn® H2004 6 terminal hydroxyl groups, nominal molecular weight of 3100 g/mol, Boltorn® H311 23 terminal hydroxyl groups, nominal molecular weight of 5300 g/mol, Boltorn® P500 Formulated bimodal product with terminal hydroxyl groups, nominal molecular weight 1800 g/mol, Boltorn® P1000 formulated bimodal product with terminal hydroxyl groups, nominal molecular weight 1500 g/mol, Boltorn® U3000 modified with unsaturated fatty acid, nominal molecular weight 6500 g/mol, Boltorn® W3000 modified with non-ionic groups and unsaturated fatty acid, nominal molecular weight 10000 g/mol.

With regard to the polyester based copolymers that can be suitable used as a polar polymers, these may further include but not limited to a dicarboxylic acid-derived residue including a residue derived from an aromatic dicarboxylic acid and a diol-derived residue including a residue derived from 4-(hydroxymethyl)cyclohexylmethyl-4'-(hydroxymethyl)cyclohexane carboxylate represented by the following chemical formula 1 and a residue derived from 4,4-(oxybis(methylene)bis) cyclohexane methanol represented by the following chemical formula 2.

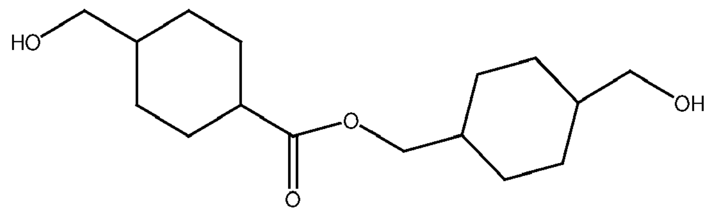

Chemical Formula 1

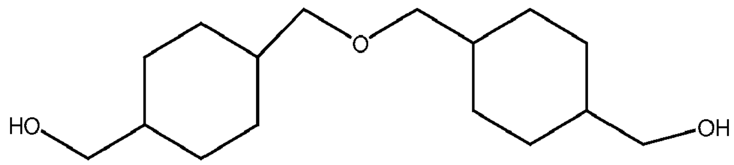

Chemical Formula 2

The compounds of chemical formula 1 and 2 can be copolymerized with aromatic dicarboxylic acid may be one or more selected from a group consisting of terephthalic acid, dimethyl terephthalate, cyclic dicarboxylic acid, isophthalic acid, adipic acid, azelaic acid, naphthalene dicarboxylic acid, and succinic acid.

The diol-derived residue of the copolymers may further include a residue derived from one or more other diols selected from a group consisting of 1,4-cyclohexane dimethanol, 1,2-propanediol, 1,3-propanediol, 1,4-butanediol, 2,2-dimethyl-1,3-propanediol, 1,6-hexanediol, 1,2-cyclohexanediol, 1,4-cyclohexanediol, 1,2-cyclohexane dimethanol, 1,3-cyclohexane dimethanol, 2,2-dimethylpropane-1,3-diol (neopentyl glycol), ethylene glycol, and diethylene glycol. A content of the diol derived residues of the residue derived from 4-(hydroxymethyl)cyclohexylmethyl 4'-(hydroxymethyl)cyclohexane carboxylate, the residue derived from 4,4-(oxybis(methylene)bis) cyclohexane methanol, and other diol-derived residues may be about 10 to 80 mol% based on 100 mol% of the dicarboxylic acid comonomer.

The synthetic and/or non-synthetic polar-polymer may also comprise the polyester based copolymers used in a mixture with polyethylene terephthalate (PET). The mixture may consist of 1 to 99 wt.% of PET and 1 to 99 wt.% of the polyester based copolymers, in order that both components add up to 100 wt.%. Additionally or alternatively the compounds according to chemical formulas 1 and 2 may be used as co-monomers together with a further diol-component, e.g. ethylene glycol, in the preparation of the polyester based copolymers.

The polyester based copolymer may be prepared by reacting the dicarboxylic acid including the aromatic dicarboxylic acid with the diol including 4-(hydroxymethyl)cyclohexylmethyl 4'-(hydroxymethyl)cyclohexane carboxylate represented by chemical formula 1 and 4,4-(oxybis(methylene)bis) cyclohexane methanol represented by chemical formula 2 to perform an esterification reaction and a polycondensation reaction. In this case, other diols such as 1,4-cyclohexane dimethanol, ethylene glycol, diethylene glycol, or the like, as described above may be further reacted, such that a polyester based copolymer further including other diol-derived residues may be prepared.

With regard to the polyether, these may comprise but not limited to compounds that contain at least one polyethylene glycol moiety and at least one fatty acid moiety coupled to the polyethylene glycol moiety. The polyethylene glycol moiety may contain 10 to 25 ethylene glycol repeating units. The fatty acid moieties may be saturated or unsaturated and may contain 10 to 30 carbon atoms, preferably 16 to 22 carbon atoms. Examples of these fatty acid moieties are oleate, laureate, stearate, palmitate and ricinolate. A specific preferred example may be ethoxylated sorbitan ester.

The ethoxylated sorbitan ester comprises a sorbitan group which is substituted by four polyethylene glycol substituents. The ethoxylated sorbitan ester may preferably comprise 14 to 26 ethylene glycol repeating units, preferably 16 to 24 ethylene glycol repeating units, more preferably between 18 and 22 repeating units. At least one of the ethylene glycol substituents in the ethoxylated sorbitan ester is connected via an ester bond to a fatty acid moiety. Preferably, at least two of the ethylene glycol substituents in the ethoxylated sorbitan ester are connected via an ester bond to a fatty

acid moiety; more preferably at least three of the ethylene glycol substituents are connected via an ester bond to a fatty acid moiety. The fatty acid moieties may be saturated or unsaturated and may contain 10 to 30 carbon atoms, preferably 16 to 22 carbon atoms.

Examples of these fatty acid moieties are oleate, laureate, stearate and palmitate. Most preferred are ethoxylated sorbitan esters comprising four polyethylene glycol substituents and wherein the ester comprises between 18 and 22 ethylene glycol repeating units and wherein three of the ethylene glycol substituents are connected to oleate, laurate or stearate groups.

Examples of ethoxylated sorbitan esters that can be used as polar-polymer are polyoxyethylene (20) sorbitane monolaurate, polyoxyethylene (20) sorbitane dilaurate, polyoxyethylene (20) sorbitane trilaurate, polyoxyethylene (20) sorbitane mono-oleate, polyoxyethylene (20) sorbitane di-oleate, polyoxyethylene (20) sorbitane tri-oleate, polyoxyethylene (20) sorbitane monostearate, polyoxyethylene (20) sorbitane distearate, polyoxyethylene (20) sorbitane tristearate, and polyoxyethylene (20) sorbitan monooleate, also known as Polysorbate 80 and E433.

During the decoloring process it may be advantageous to enhance the movement of the colored synthetic and/or non-synthetic polar-polymer material in the polar solvent, and/or enhance the movement of the decoloring composition. This may lead to a faster decoloring of the colored synthetic and/or non-synthetic polar-polymer material. According to a preferred embodiment of the method the step of exposing the colored synthetic and/or non-synthetic polar-polymer material to the decoloring composition may comprise,

- stirring the colored synthetic and/or non-synthetic polar-polymer material in the decoloring composition while the outer surface of the colored synthetic and/or non-synthetic polar-polymer material is exposed to the decoloring composition; and/or
- applying ultrasound to the decoloring composition while the outer surface of the colored synthetic and/or non-synthetic polar-polymer material is exposed to the decoloring composition; and/or
- exposing the decoloring composition flowing to the outer surface of the colored synthetic and/or non-synthetic polar-polymer material; and/or
- moving the colored synthetic and/or non-synthetic polar-polymer material through the decoloring composition.

Other ways of moving the decoloring composition and or colored synthetic and/or non-synthetic polar-polymer material such as shaking, circulating, rotating containers are also possible.

Decoloring compositions

According to one embodiment the decoloring composition may comprises, based on the total weight of the decoloring composition:

- about ≥ 0.001 wt.-% to about ≤ 5 wt.-% of at least one aromatic carbonic acid ester, preferably benzyl benzoate;
- about ≥ 0.001 wt.-% to about ≤ 15 wt.-% of at least one reducing agent, preferably formamidine sulfinic acid, or at least one oxidizing agent, preferably sodium peroxodisulfate;
- about ≥ 0.001 wt.-% to about ≤ 10 wt.-% of at least one alkaline agent, preferably NaOH;
- a solvent, preferably water, is added at 100 wt.-%.

According to another embodiment the decoloring composition may comprise, based on the total weight of the decoloring composition:

- about ≥ 0.001 wt.-% to about ≤ 5 wt.-% of at least one aromatic carbonic acid ester, preferably benzyl benzoate;
- about ≥ 0.001 wt.-% to about ≤ 15 wt.-% of at least one reducing agent, preferably formamidine sulfinic acid, or at least one oxidizing agent, preferably sodium peroxodisulfate;
- about ≥ 0.001 wt.-% to about ≤ 10 wt.-% of at least one alkaline agent, preferably NaOH;
- optional about ≥ 0.001 wt.-% to about ≤ 15 wt.-% of at least one aromatic hydrocarbons, preferably $C_3$ - alkyl substituted benzene;
- optional about ≥ 0.001 wt.-% to about ≤ 5 wt.-% of at least one alkyl substituted benzene sulfonic acid, preferably $C_9$ to $C_{13}$ - alkyl substituted benzene sulfonic acid;
- optional about ≥ 0.001 wt.-% to about ≤ 5 wt.-% of at least one organic acid, preferably benzene sulfonic acid;
- optional about ≥ 0.001 wt.-% to about ≤ 2 wt.-% of at least one first tenside, preferably a non-ionic tenside, and more preferred isotridecanolethoxylate;
- optional about ≥ 0.001 wt.-% to about ≤ 2 wt.-% of at least one second tenside, preferably 2-(2-butoxy-ethoxy)ethanol;
- a solvent, preferably water, is added at 100 wt.-%.

According to one embodiment the decoloring composition may comprise, based on the total weight of the decoloring composition:

- about ≥ 0.001 wt.-% to about ≤ 10 wt.-% of at least one aromatic carbonic acid ester, preferably benzyl benzoate;
- about ≥ 0.001 wt.-% to about ≤ 10 wt.-% of at least one reducing agent, preferably formamidine sulfinic acid, or at least one oxidizing agent, preferably sodium peroxodisulfate;
- about ≥ 0.001 wt.-% to about ≤ 15 wt.-% of at least one alkaline agent, preferably NaOH;
- optional about ≥ 0.001 wt.-% to about ≤ 3 wt.-% of at least one alkyl benzene sulfonic acid, preferably $C_9$ to $C_{13}$ - alkyl substituted benzene sulfonic acid;
- optional about ≥ 0.001 wt.-% to about ≤ 2 wt.-% of at least one first tenside, preferably a non-ionic tenside, and more preferred isotridecanolethoxylate;
- optional about ≥ 0.001 wt.-% to about ≤ 5 wt.-% of at least one second tenside, preferably 2-(2-butoxy-ethoxy)ethanol;
- a solvent, preferably water, is added at 100 wt.-%.

According to one embodiment the decoloring composition may comprise, based on the total weight of the decoloring composition:

- about ≥ 0.001 wt.-% to about ≤ 10 wt.-% of at least one aromatic carbonic acid ester, preferably benzyl benzoate;
- about ≥ 0.001 wt.-% to about ≤ 10 wt.-% of at least one reducing agent, preferably formamidine sulfinic acid, or at least one oxidizing agent, preferably sodium peroxodisulfate;
- about ≥ 0.001 wt.-% to about ≤ 15 wt.-% of at least one alkaline agent, preferably NaOH;
- optional about ≥ 0.001 wt.-% to about ≤ 5 wt.-% of at least one $C_3$ to $C_{15}$- alcohol, preferably $C_9$ to $C_{12}$ - alcohol;
- a solvent, preferably water, is added at 100 wt.-%.

According to one embodiment the decoloring composition may comprise, based on the total weight of the decoloring composition:

- about ≥ 0.001 wt.-% to about ≤ 10 wt.-% of at least one aromatic carbonic acid ester, preferably benzyl benzoate;
- about ≥ 0.001 wt.-% to about ≤ 10 wt.-% of at least one reducing agent, preferably formamidine sulfinic acid, or at least one oxidizing agent, preferably sodium peroxodisulfate;
- about ≥ 0.001 wt.-% to about ≤ 15 wt.-% of at least one alkaline agent, preferably NaOH;
- optional about ≥ 0.001 wt.-% to about ≤ 15 wt.-% of at least one aromatic hydrocarbon, preferably $C_3$ - alkyl substituted benzene;
- optional about ≥ 0.001 wt.-% to about ≤ 5 wt.-% of at least one alkyl substituted benzene sulfonic acid, preferably $C_9$ to $C_{13}$ - alkyl substituted benzene sulfonic acid;
- optional about ≥ 0.001 wt.-% to about ≤ 5 wt.-% of at least one organic acid, preferably benzene sulfonic acid;
- optional about ≥ 0.001 wt.-% to about ≤ 5 wt.-% of at least one $C_3$ to $C_{15}$- alcohol, preferably $C_9$ to $C_{12}$ - alcohol;
- optional about ≥ 0.001 wt.-% to about ≤ 2 wt.-% of at least one first tenside, preferably a non-ionic tenside, and more preferred isotridecanolethoxylate;
- optional about ≥ 0.001 wt.-% to about ≤ 5 wt.-% of at least one second tenside, preferably 2-(2-butoxy-ethoxy)ethanol;
- a solvent, preferably water, is added at 100 wt.-%.

According to one embodiment the decoloring composition may comprise, based on the total weight of the decoloring composition:

- about ≥ 0.025 wt.-% to about ≤ 0,5 wt.-% of at least one aromatic carbonic acid ester, preferably benzyl benzoate;
- about ≥ 0.1 wt.-% to about ≤ 1 wt.-% of at least one reducing agent, preferably formamidine sulfinic acid, or at least one oxidizing agent, preferably sodium peroxodisulfate;
- about ≥ 0.1 wt.-% to about ≤ 5 wt.-% of at least one alkaline agent, preferably NaOH;
- a solvent, preferably water, is added at 100 wt.-%.

According to another embodiment the decoloring composition may comprises, based on the total weight of the decoloring composition:

- about ≥ 0.025 wt.-% to about ≤ 5 wt.-% of at least one aromatic carbonic acid ester, preferably benzyl benzoate;
- about ≥ 0.1 wt.-% to about ≤ 1 wt.-% of at least one reducing agent, preferably formamidine sulfinic acid, or at least one oxidizing agent, preferably sodium peroxodisulfate;
- about ≥ 0.1 wt.-% to about ≤ 5 wt.-% of at least one alkaline agent, preferably NaOH;

- optional about ≥ 0.1 wt.-% to about ≤ 0,5 wt.-% of at least one aromatic hydrocarbons, preferably $C_3$ - alkyl substituted benzene;
- optional about ≥ 0.01 wt.-% to about ≤ 0.1 wt.-% of at least one alkyl substituted benzene sulfonic acid, preferably $C_9$ to $C_{13}$ - alkyl substituted benzene sulfonic acid;
- optional about ≥ 0.01 wt.-% to about ≤ 0.1 wt.-% of at least one organic acid, preferably benzene sulfonic acid;
- optional about ≥ 0.001 wt.-% to about ≤ 0.1 wt.-% of at least one first tenside, preferably a non-ionic tenside, and more preferred isotridecanolethoxylate;
- optional about ≥ 0.001 wt.-% to about ≤ 0.1 wt.-% of at least one second tenside, preferably 2-(2-butoxy-ethoxy)ethanol;
- a solvent, preferably water, is added at 100 wt.-%.

According to one embodiment the decoloring composition may comprises, based on the total weight of the decoloring composition:

- about ≥ 0.025 wt.-% to about ≤ 0.5 wt.-% of at least one aromatic carbonic acid ester, preferably benzyl benzoate;
- about ≥ 0.1 wt.-% to about ≤ 1 wt.-% of at least one reducing agent, preferably formamidine sulfinic acid, or at least one oxidizing agent, preferably sodium peroxodisulfate;
- about ≥ 0.1 wt.-% to about ≤ 5 wt.-% of at least one alkaline agent, preferably NaOH;
- optional about ≥ 0.001 wt.-% to about ≤ 0.1 wt.-% of at least one alkyl benzene sulfonic acid, preferably $C_9$ to $C_{13}$ - alkyl substituted benzene sulfonic acid;
- optional about ≥ 0.001 wt.-% to about ≤ 0.1 wt.-% of at least one first tenside, preferably a non-nionic tenside, and more preferred isotridecanolethoxylate;
- optional about ≥ 0.001 wt.-% to about ≤ 0.1 wt.-% of at least one second tenside, preferably 2-(2-butoxy-ethoxy)ethanol;
- a solvent, preferably water, is added at 100 wt.-%.

According to one embodiment the decoloring composition may comprises, based on the total weight of the decoloring composition:

- about ≥ 0.025 wt.-% to about ≤ 0.5 wt.-% of at least one aromatic carbonic acid ester, preferably benzyl benzoate;
- about ≥ 0.1 wt.-% to about ≤ 1 wt.-% of at least one reducing agent, preferably formamidine sulfinic acid, or at least one oxidizing agent, preferably sodium peroxodisulfate;
- about ≥ 0.1 wt.-% to about ≤ 5 wt.-% of at least one alkaline agent, preferably NaOH;
- optional about ≥ 0.01 wt.-% to about ≤ 0.5 wt.-% of at least one $C_3$ to $C_{15}$- alcohol, preferably $C_9$ to $C_{12}$ - alcohol;
- a solvent, preferably water, is added at 100 wt.-%.

According to one embodiment the decoloring composition may comprises, based on the total weight of the decoloring composition:

- about ≥ 0.025 wt.-% to about ≤ 0.5 wt.-% of at least one aromatic carbonic acid ester, preferably benzyl benzoate;
- about ≥ 0.1 wt.-% to about ≤ 1 wt.-% of at least one reducing agent, preferably formamidine sulfinic acid, or at least one oxidizing agent, preferably sodium peroxodisulfate;
- about ≥ 0.1 wt.-% to about ≤ 5 wt.-% of at least one alkaline agent, preferably NaOH;
- optional about ≥ 0.1 wt.-% to about ≤ 0.5 wt.-% of at least one aromatic hydrocarbons, preferably $C_3$ - alkyl substituted benzene;
- optional about ≥ 0.001 wt.-% to about ≤ 0.1 wt.-% of at least one alkyl substituted benzene sulfonic acid, preferably $C_9$ to $C_{13}$ - alkyl substituted benzene sulfonic acid;
- optional about ≥ 0.01 wt.-% to about ≤ 0.1 wt.-% of at least one organic acid, preferably benzene sulfonic acid;
- optional about ≥ 0.01 wt.-% to about ≤ 0.5 wt.-% of at least one $C_3$ to $C_{15}$- alcohol, preferably $C_9$ to $C_{12}$ - alcohol;
- optional about ≥ 0.001 wt.-% to about ≤ 0.1 wt.-% of at least one first tenside, preferably a non-ionic tenside, and more preferred isotridecanolethoxylate;
- optional about ≥ 0.001 wt.-% to about ≤ 0.1 wt.-% of at least one second tenside, preferably 2-(2-butoxy-ethoxy)ethanol;
- a solvent, preferably water, is added at 100 wt.-%.

During the decoloring process the colored synthetic and/or non-synthetic polar-polymer material may have any form. The colored synthetic and/or non-synthetic polar-polymer material may have the form of an article, such as a bottle, a sheet, a foil, a tube, a container, a part, a non-woven fabric, and preferably the article may be selected from the group

comprising computer face-plates, keyboards, bezels and cellular phones, color coded packaging and containers of all types, including ones for industrial components, residential and commercial lighting fixtures and components therefor, such as sheets, used in building and in construction, tableware, including plates, cups and eating utensils, small appliances and their components, optical and sun-wear lenses. It may be possible that the article is disintegrated in pieces or smaller parts. Furthermore, during the decoloring process the colored synthetic and/or non-synthetic polar-polymer material may have the form of flakes, particles, powders and/or granulates.

With regard to further advantages and technical features of the decolorizing of an article it is an additional benefit that the decolorizing method allows a reversible and selective decolorizing of a colored synthetic and/or non-synthetic polar-polymer material.

To summarize the above, the present invention solves an important object how to design a decolorizing process to be environmentally friendly and energy saving.

Other example embodiments will be described in the following with reference to the examples 1 to 11 and decoloring bathes A to D. It has to be noted that the examples are only provided for illustration of the general concept by examples not defining the scope of protection of the invention. The examples are not drawn to scale. Features shall not be considered to be essential for the present invention because they are depicted in the examples.

DETAILED DESCRIPTION OF THE EXAMPLES

The invention will be described in the following with reference to exemplary examples 1 to 11 and decoloring bathes A to D.

RGB

Colors can be described in the RGB or in the Lab color space. In the examples the coloration of the samples is determined in the Lab color space and measured with a Spectrometer Konika-Minolta CM-3600A - according to the guideline of the INSTRUCTION MANUAL CM-3600A (©2011-2013 KONICA MINOLTA, INC.). The Lab color can be converted into the RGB color.

The principle of the RGB color space

This principle is based on the three-color theory. The RGB color space works on the principle of the additive color space. This means that it reproduces the entire color range by mixing the basic colors red, green and blue.
The RGB color space can be found in all self-illuminating systems, such as monitors or television screens. All possible colors are defined by their red, green and blue components and mapped accordingly by the overlay of colored light.

The principle of the Lab color space

Unlike the RGB color space, the Lab color space is based on counter-color theory. This is based on the assumption that three separate chemical processes take place in the human retina, which always contain two opposite colors, the two opposite colors striving for balance with one another. An example pair would be the combination of blue and yellow. Lab is used, for example, for photo editing software. While the RGB color space is device-dependent, it is not the Lab color space. RGB includes - regardless of the device - all potentially possible colors, which above all enables the conversion of color definitions from one device to the other.

Convert RGB to Lab

It is important for the conversion that Lab coordinates separate brightness information L from the rest of the color information. RGB images do not have such a separation - a change in brightness therefore changes the entire color information.

Convert sRGB to Lab: http://colormine.org/convert/rgb-to-lab
Conversion Lab to sRGB: http://colormine.org/convert/lab-to-rgb

The Lab - measuring device

The Lab is measured with a - Spectrometer Konika-Minolta CM-3600A - according to the guideline of the INSTRUCTION MANUAL CM-3600A (©2011-2013 KONICA MINOLTA, INC.).

Method for preparation of colored Article

**Example 1**

A colored plastic article in the form of a platelet W x H x T = 30 x 50 x 1 $mm^3$ is produced in an extruder by an injection molding process by:
mixing a plastic material with a color masterbatch, in a weight ratio of 96:4 (plastic material: color masterbatch)

- wherein the plastic material is PE (Lyondell Basell Hostalen ACP 5831 D),
- wherein the color masterbatch comprises a mixture of the plastic material, ethyl-methacrylate-copolymer (Lotryl 18MA02), Polysorbate 20 and as dye Bemacron Blau E-FBL in a weight ratio of 35:60:2.5:2.5.

Subsequent to the first step, the platelet is pressed in a press at temperatures of 180°C to form a uniformly thin film of 250 μm thickness

**Example 2**

A colored plastic article in the form of a platelet W x H x T = 30 x 50 x 1 $mm^3$ is produced in an extruder by an injection molding process by:
mixing a plastic material with a color masterbatch, in a weight ratio of 96:4 (plastic material: color masterbatch)

- wherein the plastic material is PE (Lyondell Basell Hostalen ACP 5831 D),
- wherein the color masterbatch comprises a mixture of the plastic material, ethyl-methacrylat-copolymer (Lotryl 18MA02), Polysorbate 20 and as dye Bemacron Gelb E-3GL in a weight ratio of 35:60:2.5:2.5.

Subsequent to the first step, the platelet is pressed in a press at temperatures of 180°C to form a uniformly thin film of 250μm thickness.

**Example 3**

A colored plastic article in the form of a platelet W x H x T = 30 x 50 x 1 $mm^3$ is produced in an extruder by an injection molding process by:
mixing a plastic material with a color masterbatch, in a weight ratio of 96:4 (plastic material: color masterbatch)

- wherein the plastic material is PE (Lyondell Basell Hostalen ACP 5831 D),
- wherein the color masterbatch comprises a mixture of the plastic material, ethyl-methacrylat-copolymer (Lotryl 18MA02), Polysorbate 20 and as dye Bemacron Rot E-FBL in a weight ratio of 35:60:2.5:2.5.

Subsequent to the first step, the platelet is pressed in a press at temperatures of 180°C to form a uniformly thin film of 250μm thickness.

**Example 4**

A colored plastic article in the form of a platelet W x H x T = 30 x 50 x 1 $mm^3$ is produced in an extruder by an injection molding process by:
mixing a plastic material with a color masterbatch, in a weight ratio of 96:4 (plastic material: color masterbatch)

- wherein the plastic material is PE (Lyondell Basell Hostalen ACP 5831 D),
- wherein the color masterbatch comprises a mixture of the plastic material, ethyl-methacrylat-copolymer (Lotryl 18MA02), Polysorbate 20 and as dye Disperse Blue 56 according to formula A5 in a weight ratio of 36,5:60:2.5:1.

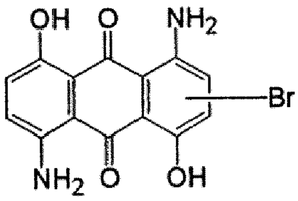

(A5)

Subsequent to the first step, the platelet is pressed in a press at temperatures of 180°C to form a uniformly thin film of 250µm thickness.

**Example 5**

A colored plastic article in the form of a platelet W x H x T = 30 x 50 x 1 $mm^3$ is produced in an extruder by an injection molding process by:
mixing a plastic material with a color masterbatch, in a weight ratio of 96:4 (plastic material: color masterbatch)

- wherein the plastic material is PE (Lyondell Basell Hostalen ACP 5831 D),
- wherein the color masterbatch comprises a mixture of the plastic material, ethyl-methacrylat-copolymer (Lotryl 18MA02), Polysorbate 20 and as dye Bemacron Blau S-BGL in a weight ratio of 35:60:2.5:2.5.

Subsequent to the first step, the platelet is pressed in a press at temperatures of 180°C to form a uniformly thin film of 250µm thickness

**Example 6**

A colored plastic article in the form of a platelet W x H x T = 30 x 50 x 1 $mm^3$ is produced in an extruder by an injection molding process by:
mixing a plastic material with a color masterbatch, in a weight ratio of 96:4 (plastic material: color masterbatch)

- wherein the plastic material is PE (Lyondell Basell Hostalen ACP 5831 D),
- wherein the color masterbatch comprises a mixture of the plastic material, ethyl-methacrylat-copolymer (Lotryl 18MA02), Polysorbate 20 and as dye Bemacron Gelb S-6GF in a weight ratio of 35:60:2.5:2.5.

Subsequent to the first step, the platelet is pressed in a press at temperatures of 180°C to form a uniformly thin film of 250µm thickness.

**Example 7**

A colored plastic article in the form of a platelet W x H x T = 30 x 50 x 1 $mm^3$ is produced in an extruder by an injection molding process by:
mixing a plastic material with a color masterbatch, in a weight ratio of 96:4 (plastic material: color masterbatch)

- wherein the plastic material is PE (Lyondell Basell Hostalen ACP 5831 D),
- wherein the color masterbatch comprises a mixture of the plastic material, ethyl-methacrylat-copolymer (Lotryl 18MA02), Polysorbate 20 and as dye Bemacron Rubin S-2GFL in a weight ratio of 35:60:2.5:2.5.

Subsequent to the first step, the platelet is pressed in a press at temperatures of 180°C to form a uniformly thin film of 250µm thickness.

**Example 8**

A colored plastic article in the form of a platelet W x H x T = 30 x 50 x 1 $mm^3$ is produced in an extruder by an injection molding process by:
mixing a plastic material with a color masterbatch, in a weight ratio of 96:4 (plastic material: color masterbatch)

- wherein the plastic material is PE (Lyondell Basell Hostalen ACP 5831 D),
- wherein the color masterbatch comprises a mixture of the plastic material, ethyl-methacrylat-copolymer (Lotryl 18MA02), Polysorbate 20 and as dye Disperse Red 167 according to formula A3 in a weight ratio of 36,5:60:2.5:1.

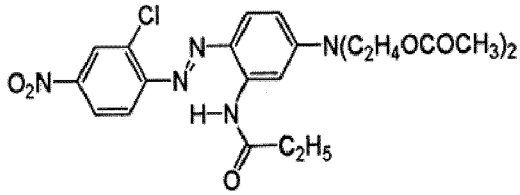

(A3)

Subsequent to the first step, the platelet is pressed in a press at temperatures of 180°C to form a uniformly thin film of 250μm thickness.

**Example 9**

A translucent white (like frosted glass) polar polymer material of a blend of 84 wt.-% HDPE (MFI 20) and 12 wt.-% of a polyether block amide (melting point 134°C, ISO 11357-1/-3) and 4% of a random terpolymer of ethylene, acrylic ester and maleic anhydride (acrylate content 17%, MSA content 3%, MFI 5g/10min, 190°C, 2,16kg) with a size of W x H x T = 100 x 100 x 0,25 $mm^3$ is placed in 800 ml of an aqueous dyeing solution, wherein the aqueous dyeing solution comprises 8 g of an organic aromatic dye having formula A5:

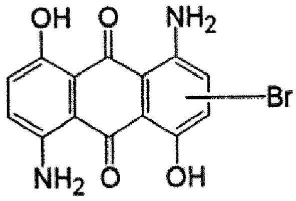

(A5),

a dispersing agent of 29 g Ca-lignin sulfonate obtainable from Borregaard and 320 ml of a solubilizer of Ethanol, wherein the aqueous dyeing solution contacting the polar polymer material has a temperature of 95°C. The polar polymer material layer is exposed to the aqueous dyeing solution for about 60 minutes at a pH of 3,3. Thereafter the polar polymer material layer is removed from the aqueous dyeing solution and the colored polar polymer material layer is rinsed with water of 30° C at least 3 times to remove color residuals. The homogenous penetration depth of the organic aromatic dye (formula A5) in the polar polymer material layer is at least 25 μm and the achieved coloration is determined to Lab: 50/0/-55 or converted to RGB: 0/124/213.

**Example 10**

A translucent white (like frosted glass) polar polymer material of a blend of 84 wt.-% HDPE (MFI 20) and 12 wt.-% of a polyether block amide (melting point 134°C, ISO 11357-1/-3) and 4% of a random terpolymer of ethylene, acrylic ester and maleic anhydride (acrylate content 17%, MSA content 3%, MFI 5g/10min, 190°C, 2,16kg) with a size of W x H x T = 100 x 100 x 0,25 $mm^3$ is placed in 800 ml of an aqueous dyeing solution, wherein the aqueous dyeing solution comprises 8 g of an organic aromatic dye having formula A3:

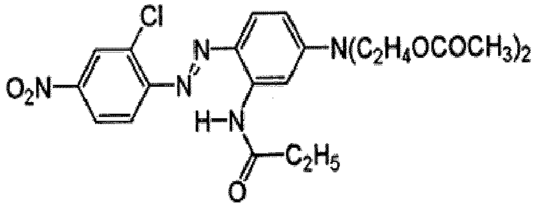

(A3),

a dispersing agent of 29 g Ca-lignin sulfonate obtainable from Borregaard and 160 ml of a solubilizer of Ethanol, wherein the aqueous dyeing solution contacting the polar polymer material has a temperature of 115°C. The polar polymer material layer is exposed to the aqueous dyeing solution for about 60 minutes at a pH of 3,3. Thereafter the polar polymer material layer is removed from the aqueous dyeing solution and the colored polar polymer material layer is rinsed with water of 30° C at least 3 times to remove color residuals. The homogenous penetration depth of the organic aromatic dye (formula A3) in the polar polymer material layer is at least 25 μm and the achieved coloration is determined to Lab: 50/0/-55 or converted to RGB: 0/124/213.

**Example 11**

A colored plastic article in the form of a platelet W x H x T = 30 x 50 x 1 $mm^3$ is produced in an extruder by an injection moulding process by:
mixing a plastic material with a color masterbatch, in a weight ratio of 96:4 (plastic material: color masterbatch)

- wherein the plastic material is PE (Lyondell Basell Hostalen ACP 5831 D),
- wherein the color masterbatch comprises a mixture of the plastic material, ethyl-methacrylate-copolymer (Lotryl 18MA02), Polysorbate 20 and as dye Bemacron Blau E-FBL in a weight ratio of 35:60:2.5:2.5.

Subsequent to the first step, the platelet is pressed in a press at temperatures of 180°C to form a uniformly thin film of 100μm thickness.

**Decoloring Bath comprising different decoloring compositions**

**Decoloring Bath A**

4,4 g sodium hydroxide are solved in 1.000 mL water. To this alkaline aqueous solution 5g of the reducing agent formamidine sulfinic acid and 4 mL/L of further decoloring composition comprising the levelling agent benzyl benzoate, C9-aromatic hydrocarbons, C9-C13-alkyl benzenesulfonic acid sodium salt, benzenesulfonic acid sodium salt and a surfactant Isotridecanolethoxylate in a weight ratio of 18:66:7:7:2 are added. The final decoloring composition also named "decoloring bath" is heated up to the decoloring temperature while stirring.

**Decoloring Bath B**

4,4 g sodium hydroxide are solved in 1.000mL water. To this alkaline aqueous solution 5g of the reducing agent formamidine sulfinic acid and 4 mL/L of further decoloring composition comprising the levelling agent benzyl benzoate, C9-C13-alkyl benzenesulfonic acid sodium salt, benzenesulfonic acid sodium salt and 2-(2-Butoxy-ethoxy)ethanol in a weight ratio of 70:3:7:20 are added. The final decoloring composition also named "decoloring bath" is heated up to the decoloring temperature while stirring.

**Decoloring Bath C**

4,4 g sodium hydroxide are solved in 1.000mL water. To this alkaline aqueous solution 5g of the reducing agent formamidine sulfinic acid and 4 mL/L of further decoloring composition comprising the levelling agent benzyl benzoate, UAs and 2-(2-Butoxy-ethoxy)ethanol in a weight ratio of 60:38:2 are added. The final decoloring composition also named "decoloring bath" is heated up to the decoloring temperature while stirring.

**Decoloring Bath D** (comparative Example)

4,4 g sodium hydroxide are solved in 1.000mL water. To this alkaline aqueous solution 5g of the reducing agent formamidine sulfinic acid and 4 mL/L of further decoloring composition comprising the levelling agent benzyl benzoate. The final decoloring composition also named "decoloring bath" is heated up to the decoloring temperature while stirring.

**Decoloring**

For the decoloring a sample (films of 250μm) it is cut into 9 parts of 3 x 3 $cm^2$ and completely immersed in the

heated up decoloring bath and both the sample and The final decoloring composition also named "decoloring bath" are constantly agitated by stirring. 1 piece of the sample is removed from The final decoloring composition also named "decoloring bath" at fixed times, rinsed with water of 30° C at least 3 times to remove color residuals, dried with a paper towel and its remaining color strength is determined.

Sample 1 to 4 and 9 are decolorized at 100°C, the samples 5 to 8 and 10 are decolorized at 120°C. Sample 11 is decolorized at 80°C

**Decoloring and determination of the decoloring rate by determination of color strength**

To determine the decoloring rate, the samples are placed in a pre-tempered decoloring bath. Samples of the examples are taken successively out of the final decoloring composition also named "decoloring bath" and the remaining color strength K/S of the sample is determined. The decoloring is considered finished with a color loss of 90% corresponding to a remaining colour strength of 10% of the initial value. To determine the decoloring rates in the different decoloring baths, the time at which the remaining colour strength of the respective sample is 10% is compared.

Color strength according to Kubelca-Munk can be determined by the spectrophotometer Konica-Minolta 3600A at maximum absorbance. The remaining color strength is the color strength K/S of the plastic article before decoloring minus the loss of color strength K/S during the migration test in % with color strength K/S according to Kubelca-Munk. The remaining color strength is calculated as follows:

$$\text{remaining colour strength} = 1 - \frac{(color\ strength\ before - color\ strength\ after)}{color\ strength\ before}\ in\ \%$$

*(before = before decoloring; after = after decoloring)*

According to Kubelka-Munk, there is a linear relationship between the color strength and the dye content or concentration in a plastic. Therefore, a remaining colour strength in percent after decolorization corresponds to the remaining dye content or the dye concentration after decolorization.

Table 1

| Time in minutes for decolorization to remaining color strength 10% | | | | | |
|---|---|---|---|---|---|
| | | Decoloring Composition | | | |
| | T [°C] decoloring bath | A min. | B min. | C min. | D min. |
| Example 1 | 100 | 12 | 21 | 23 | > 30 |
| Example 2 | 100 | 11 | 20 | 22 | > 30 |
| Example 3 | 100 | 12 | 22 | 23 | > 30 |
| Example 4 | 100 | 12 | 21 | 23 | > 30 |
| Example 5 | 120 | 11 | 21 | 22 | > 30 |
| Example 6 | 120 | 15 | 23 | 23 | > 30 |
| Example 7 | 120 | 16 | 24 | 25 | > 30 |
| Example 8 | 120 | 17 | 24 | 25 | > 30 |
| Example 9 | 100 | 14 | 20 | 21 | > 30 |
| Example 10 | 120 | 16 | 23 | 25 | > 30 |
| Example 11 | 80 | 14 | 22 | 24 | > 30 |

It can be taken from Table 1 that the process of the present invention is a very mild, efficient and environmental friendly method for decolorizing a colorized polar polymer material, wherein the dye or dye mixture is removed from the colorized polar-polymer material. Further compared to the use of benzyl benzoate alone (decoloring composition D), a significant accelerated decolorisation of plastics by a factor of ≥ 1.2 is achieved by adding further decolorising additives as described for decoloring compositions A , B and C.

Depicted or described connections between components are generally to be understood to be functional connections. They can be implemented as direct links or as indirect links via several other components. The order of presented actions is not mandatory; alternative orders are possible. Actions can be implemented in different ways. They could be implemented in software using program instructions; or they could be implemented in hardware; or they could be implemented making use of a combination of hardware and software. It is to be understood that the described embodiments are examples only, which may be modified and/or supplemented in many ways within the scope of the claims. In particular, any feature described for a particular embodiment can be used by itself or in combination with other features in any other embodiment. Each feature that has been described for an embodiment of a particular category can also be used in an equivalent manner in an embodiment of any other category.

## Claims

**1.** Method for decolorizing a colored synthetic and/or non-synthetic polar-polymer material, comprising the steps:

exposing the colored synthetic and/or non-synthetic polar-polymer material to a decoloring composition, wherein the decoloring composition comprises at least one aromatic carbonic acid ester, at least one reducing agent or at least one oxidizing agent, and at least one alkaline agent;
wherein the colored synthetic and/or non-synthetic polar-polymer material to be decolorized comprises:

- at least one organic aromatic coloring agent having a molecular weight Mw in the range of about ≥ 230 g/mol to about ≤ 750 g/mol, wherein the organic aromatic coloring agent is not a chemical reactive organic aromatic coloring agent that forms a chemical covalently bound;

i) at least one synthetic and/or non-synthetic polar-polymer having a Mw of about ≥ 1000 g/mol, or
ii) at least one synthetic and/or non-synthetic non-polar-polymer having a Mw of about ≥ 1000 g/mol; wherein the synthetic and/or non-synthetic non-polar-polymer comprises in addition:

- at least one synthetic and/or non-synthetic polar-polymer having a Mw of about ≥ 1000 g/mol, and/or
- at least one synthetic and/or non-synthetic polar-oligomer having a Mw of about ≥ 600 g/mol and < 1000 g/mol, and/or
- at least one synthetic and/or non-synthetic polar-additive having a Mw of about ≥ 70 and < 600 g/mol;

wherein the polar-additive is selected different to the organic aromatic coloring agent having a molecular weight Mw in the range of about ≥ 230 g/mol to about ≤ 750 g/mol.

**2.** The method according to claim 1, wherein the colored synthetic and/or non-synthetic polar-polymer material is decolorized by exposing the colored synthetic and/or non-synthetic polar-polymer material to the decoloring composition at a temperature of about ≥ 80 °C to about ≤ 200 °C, wherein optional the temperature of the decoloring composition is selected ≥ the glass-transition temperature $T_g$ and below the decomposition temperature of the colored synthetic and/or non-synthetic polar-polymer material, preferably the temperature of the decoloring composition is selected > $T_g$ and ≤ the melting temperature $T_m$ of the colored synthetic and/or non-synthetic polar-polymer material; or wherein optional the temperature of the decoloring composition is selected below the heat distortion temperature of the colored synthetic and/or non-synthetic polar-polymer material.

**3.** The method according to claim 1 or 2, wherein at least 90 wt.-% of the organic aromatic coloring agent having a molecular weight Mw in the range of about ≥ 230 g/mol to about ≤ 750 g/mol of the colored synthetic and/or non-synthetic polar-polymer material is removed, when the colored synthetic and/or non-synthetic polar-polymer material is exposed to the decoloring composition at a temperature of about 80° C to 120° C for about ≥ 1 minute to about ≤ 60 minutes, preferably for about ≥ 5 minutes to about ≤ 50 minutes, in addition preferred for about ≥ 10 minutes to about ≤ 40 minutes, also preferred for about ≥ 15 minutes to about ≤ 35 minutes, and furthermore preferred for about ≥ 20 minutes to about ≤ 30 minutes, more preferred for about ≥ 15 minutes to about ≤ 45 minutes and most preferred for about ≥ 10 minutes to about ≤ 30 minutes.

**4.** The method according to any of claims 1 to 3, wherein the decoloring composition is liquid at about ≥ 23 °C and ≤ 200 °C; wherein optional the decoloring composition is a mixture of liquids not forming a homogeneous mixture when added together.

**5.** The method according to any of claims 1 to 4, wherein at least one aromatic carbonic ester of the decoloring composition is selected from the group comprising benzoic acid benzyl esters, naphthalic acid benzyl esters, phthalic acid benzyl esters and/or isophthalic acid benzyl esters, mixed aromatic aliphatic esters comprising benzyl butyl phthalates, and aliphatic esters comprising benzoic acid butyl esters, phthalic acid dibutyl esters, and/or isophthalic acid dibutyl esters; and preferably benzoic acid benzyl ester.

**6.** The method according to any of claims 1 to 5, wherein at least one reducing agent of the decoloring composition is selected from the group comprising:

- hydrogen in combination with precious metal catalyst, preferably H2/Ni, H2/Pd, H2/Pt, hydrides;
- complex hydrides, preferably sodium hydride NaH, lithium aluminum hydride LiAlH4, borohydride salts NaBH4;
- base metals, preferably Li, Na, Mg, Zn; low-valent nitrogen;
- phosphorus and sulphur compounds, preferably amidine sulfonic acid, formamidine sulphinic acid, hydrogen sulfide, sodium sulfide, $S^{2-}$, Na2S, sulfites, $SO2^{-3}$, sodium sulfite, sulfurous acid, sulfur dioxide, thiosulphate, sodium dithionite, sodium bisulfite, $NaHSO_3$, formamidine sulfonic acid, zinc hydroxylmethansulfinate, sodium hydroxy methane sulfinate also known as rongalite, thiourea dioxide also known as thiox, sulfonic acid and its derivatives, borohydride salts, sodium hydroxide, sodium carbonate, sodium bicarbonate, sodium oxide, and mixtures of sodium hydroxide and calcium oxide, sulfinic acid derivatives, borohydrides and/or REDULIT GIN;
- sulfinic acid and sulfinic acid derivates, preferably aminoimino methansulfinsäure;
- glucose mixtures with dispersants; and
- more preferred formamidine sulfinic acid.

**7.** The method according to any of claims 1 to 6, wherein the alkaline agent of the decoloring composition is selected from the group comprising alkaline hydroxide or alkaline earth hydroxide, alkali and alkaline earth carbonates, alkaline earth hydrogen carbonates and other inorganic bases of the 1st to 3rd main groups of the periodic table, organic bases, ammonia and/or triethyl amine; preferably the alkaline agent is NaOH and/or KOH and more preferred NaOH.

**8.** The method according to any of claims 1 to 7, wherein the decoloring composition comprises in addition at least one aromatic hydrocarbon, wherein the aromatic hydrocarbon is preferably selected from $C_1$ to $C_5$ - alkyl substituted benzene, $C_3$ - alkyl substituted benzene, 1,3,5-trimethylbenzene, 1-ethyl-4-methylbenzene, prop-1-en-2-ylbenzene, propan-2-ylbenzene, propyl benzene, and more preferred $C_3$ -alkyl substituted benzene.

**9.** The method according to any of claims 1 to 8, wherein the decoloring composition comprises in addition at least one alcohol selected from the group $C_1$ to $C_{15}$ - alcohol, preferably ethanol, isopropanol, propanol, butanol, pentanol, hexanol, heptanol, octanol, nonanol, decanol, undecanol, dodecanol, tridecanol, tetradecanol, pentadecanol and its isomeres, glycols, glycols such as diethylene glycol and its oligomers, further C3 to C15 diols such as propanediol, butanediol or pentanediol or triols such as glycerol, more preferred $C_3$ to $C_{15}$ - alcohols, and furthermore preferred $C_9$ to $C_{12}$ - alcohols.

**10.** The method according to any of claims 1 to 9, wherein the decoloring composition comprises in addition at least one tenside, preferably a non-ionic tenside, wherein the nonionic tenside is preferably selected from the group of aromatic esters and hydrocarbons, aromatic and non-aromatic carboxylic acid esters, ethyl acrylate, fatty acid esters, alkoxylated, preferably ethoxylated or ethoxylated and propoxylated fatty acid esters, alkoxylated, preferably ethoxylated or ethoxylated and propoxylated fatty acids, poly oxyethylated compounds derived from sorbitol and oleic acid, polysorbate 20, polysorbate 40, polysorbate 60, polysorbate 65, polysorbate 80, polymers that are fatty acid-based with a non-ionic group per molecule, acrylate-copolymers, acrylate/styrene copolymers, fatty acid derivatives, polyalkoxylate, and preferably 2-(2-butoxy-ethoxy)ethanol and in particular preferred isotridecanolethoxylate.

**11.** The method according to any of claims 1 to 9, wherein the decoloring composition comprises in addition at least one alkyl benzenesulfonic acid, alkyl naphtalenesulfonic acid, alkyl phthalic sulfonic acid and/or isophthalic sulfonic acid benzyl, and preferably a $C_9$-$C_{13}$-alkyl benzenesulfonic acid.

**12.** The method according to any of claims 1 to 11, wherein the decoloring composition comprises in addition at least one solvent additive selected from the group of anorganic acids, preferably sulfonic acid, $C_3$ to $C_6$ - ketone, preferably acetone, $C_2$ to $C_6$ - aldehyde, $C_1$ to $C_6$ - carboxylic acid and their derivatives such as acid chlorides or acid amides, polar aromatic solvents liquid at 23 °C, preferably DMSO, DMF, benzylic alcohols, linear or cyclic aliphatic ethers, preferably diethyl ether, diiso propyl ether, dibutyl ether, tetrahydrofuran, organic alkyl esters, esters such as methyl

acetate, ethyl acetate, butyl acetate, benzyl benzoate, halogenated solvents such as dichloromethane, trichloromethane, oils like anise oil, camphor oil, essential oils and fragrance oils, spindle oil, cedarwood oil, cinnamon oil, citronella oil, peppermint oil, pine oil, lemon oil, fuel oil, mineral oil, polyester resins and polyester softeners.

**13.** The method according to any of claims 1 to 12, wherein the decoloring composition is adjusted to a pH in the range of about ≥ 7 to about ≤ 14, preferably about ≥ 7.5 to about ≤ 13.5, further preferred about ≥ 8 to about ≤ 13, in addition preferred ≥ 8.5 to about ≤ 12.5, more preferred ≥ 9 to about ≤ 12 and most preferred ≥ 9.5 to about ≤ 11.5 or ≥ 10 to about ≤ 11.

**14.** The method according to any of the preceding claims 1 to 13, wherein the organic aromatic coloring agent has a molecular weight Mw in the range of ≥ 230 g/mol to ≤ 750 g/mol, preferably the organic aromatic coloring agent has a molecular weight Mw in the range of ≥ 270 g/mol to ≤ 550 g/mol, and more preferably the organic aromatic coloring agent has a molecular weight Mw in the range of ≥ 285 g/mol to ≤ 400 g/mol.

**15.** The method according to any of the preceding claims 1 to 14, wherein the organic aromatic coloring agent comprises at least 2 to 6 aromatic or hetero aromatic six-membered rings, at least 3 to 5 aromatic or hetero aromatic six-membered rings and at least 1 to 4 five-membered rings, or having at least 2 to 6 aromatic six-membered rings; and/or wherein the organic aromatic coloring agent comprises at least on heteroatom selected from N, O, S, Cl, Br.

**16.** The method according to any of claims 1 to 15, wherein the oxidizing agent is selected from the group comprising:

- a peroxide, peroxyacetic acid, hydrogen peroxide, peroxodisulfate, ozone, sodium percarbonate, sodium perborate, sodium percarbonate, m-nitrobenzolsulfonat, H2SO4, $HNO_3$, oxygen-containing anions (oxo anions) of transition metals in high oxidation states such as permanganate $MnO_4^-$, $KMnO_4$, phosphate, oxygen difluoride fluorine, cryptone difluoride, dichromate $Cr_2O_7^{2-}$, metal ions such as $Ce_4^+$, noble metal ions such as those of silver and copper, anions of halo-oxygen acids such bromate $BrO_3^-$, halogens, such as fluorine, chlorine, bromine and iodine, hypochlorite, sodium hypochlorite, sodium peroxodisulfate and/or potassium hypochlorite.

**17.** The method according to any of claims 1 to 16, wherein after exposing the colored synthetic and/or non-synthetic polar-polymer material to the decoloring composition the method further comprises and additional step of further decolorizing the colored synthetic and/or non-synthetic polar-polymer material and/or the decoloring composition by:

- an oxidation process, preferably by exposing to at least one oxidation agent select from the group comprising of peroxide, peroxyacetic acid, hydrogen peroxide, peroxodisulfate, ozone, sodium percarbonate, sodium perborate, sodium percarbonate, m-Nitrobenzolsulfonat, $H_2SO_4$, $HNO_3$, oxygen-containing anions (oxo anions) of transition metals in high oxidation states such as permanganate $MnO_4^-$, $KMnO_4$, phosphate, oxygen difluoride fluorine, cryptone difluoride, dichromate $Cr_2O_7^{2-}$, metal ions such as $Ce_4^+$, noble metal ions such as those of silver and copper, anions of halo-oxygen acids such bromate $BrO_3^-$, halogens, such as fluorine, chlorine, bromine and iodine, hypochlorite, sodium hypochlorite, sodium peroxodisulfate and/or potassium hypochlorite;
- a reduction process, preferably by exposing to at least one reduction agent select from the group comprising of hydrogen in combination with precious metal catalyst, preferably H2/Ni, H2/Pd, H2/Pt, hydrides;
complex hydrides, preferably sodium hydride NaH, lithium aluminum hydride LiAlH4, borohydride salts NaBH4; base metals, preferably Li, Na, Mg, Zn; low-valent nitrogen;
phosphorus and sulphur compounds, preferably amidine sulfonic acid, formamidine sulphinic acid, hydrogen sulfide, sodium sulfide, $S^{2-}$, Na2S, sulfites, $SO2^{-3}$, sodium sulfite, sulfurous acid, sulfur dioxide, thiosulphate, sodium dithionite, sodium bisulfite, $NaHSO_3$, formamidine sulfonic acid, zinc hydroxylmethansulfinate, sodium hydroxy methane sulfinate, thiourea dioxide, sulfonic acid and its derivatives, borohydride salts, sodium hydroxide, sodium carbonate, sodium bicarbonate, sodium oxide, and mixtures of sodium hydroxide and calcium oxide, sulfinic acid derivatives, borohydrides, REDULIT GIN,
- sulfinic acid and sulfinic acid derivates, preferably aminoimino methansulfinic acid,
- glucose mixtures with dispersants, and
- more preferred formamidine sulfinic acid; and/or
- adsorption and/or absorption process, preferably by exposing to carbon black, zeolites.

**18.** The method according to any of claims 1 to 17, wherein the colored synthetic and/or non-synthetic polar-polymer material after decolorization comprises about ≥ 0 wt.-% to about ≤ 10 wt.-%, preferably about ≥ 0.01 wt.-% to about ≤ 5 wt.-%, and further preferred about ≥ 0.1 wt.-% to about ≤ 1 wt.-% of organic aromatic coloring agent having a molecular weight Mw in the range of about ≥ 230 g/mol to about ≤ 750 g/mol, based on the total amount of said

organic aromatic coloring agent in the colored synthetic and/or non-synthetic polar-polymer material before it is decolorized.

**19.** The method according to any of claims 1 to 18, wherein the colored synthetic and/or non-synthetic polar-polymer material, before it is decolorized, comprises about 0.00001 wt.% to about ≤ 10 wt.%, preferably about 0.001 wt.% to about ≤ 5 wt.%, further preferred about 0.01 wt.% to about ≤ 3 wt.%, also preferred about 0.1 wt.% to about ≤ 2 wt.%, and in addition preferred about 0.5 wt.% to about ≤ 1 wt.%, organic aromatic coloring agent, based on the total weight of the colored synthetic and/or non-synthetic polar-polymer material before it is decolorized.

**20.** The method according to any of claims 1 to 19, wherein the decolorization process of the colored synthetic and/or non-synthetic polar-polymer material is carried out in a pressure vessel at a pressure above atmospheric pressure.

**21.** The method according to any of claims 1 to 20, wherein

- the synthetic and/or non-synthetic polar-polymer comprises at least ≥ 5 wt.-% of heteroatoms, based on the total weight of the synthetic and/or non-synthetic polar-polymer, wherein a heteroatom is any atom excluding C-atoms and H-atoms; and/or
- the synthetic and/or non-synthetic polar-oligomer comprises at least ≥ 5 wt.-% of heteroatoms, based on the total weight of the synthetic and/or non-synthetic polar-oligomer, wherein a heteroatom is any atom excluding C-atoms and H-atoms; and/or
- the synthetic and/or non-synthetic polar additive comprises at least ≥ 5 wt.-% of heteroatoms, based on the total weight of the synthetic and/or non-synthetic polar additive, wherein a heteroatom is any atom excluding C-atoms and H-atoms.

**22.** The method according to any of claims 1 to 21,wherein the non-polar-polymer is selected from the group of polyalkylene polymers, polyalkylene copolymers, polyalkylene block copolymers; the non-polar-polymer is preferably selected from polymeric aliphatic or aromatic hydrocarbons, preferably polyalkylene polymers, polyalkylene co- and terpolymer with random or block-structure; and more preferred from polyethylene (PE), polypropylene (PP), polybutene (PB), polystyrene, polyisobutylene, polybutadiene, polyisoprene.

**23.** The method according to any of the previous claims 1 to 22, wherein the step of exposing the colored synthetic and/or non-synthetic polar-polymer material to the decoloring composition for decolorization comprises,

- stirring the colored synthetic and/or non-synthetic polar-polymer material in the decoloring composition while the outer surface of the colored synthetic and/or non-synthetic polar-polymer material is exposed to the decoloring composition; and/or
- applying ultrasound to the decoloring composition while the outer surface of the colored synthetic and/or non-synthetic polar-polymer material is exposed to the decoloring composition; and/or
- exposing the decoloring composition flowing to the outer surface of the colored synthetic and/or non-synthetic polar-polymer material; and/or
- moving the colored synthetic and/or non-synthetic polar-polymer material through the decoloring composition.

**24.** The method according to any of the previous claims 1 to 23, wherein the decoloring composition comprises, based on the total weight of the decoloring composition:

- about ≥ 0.001 wt.-% to about ≤ 5 wt.-% of at least one aromatic carbonic acid ester, preferably benzyl benzoate;
- about ≥ 0.001 wt.-% to about ≤ 15 wt.-% of at least one reducing agent, preferably formamidine sulfinic acid, or oxidizing agent, preferably sodium peroxodisulfate;
- about ≥ 0.001 wt.-% to about ≤ 10 wt.-% of at least one alkaline agent, preferably NaOH;
- a solvent, preferably water, is added at 100 wt.-%.

**25.** The method according to any of the previous claims 1 to 24, wherein the decoloring composition comprises, based on the total weight of the decoloring composition:

- about ≥ 0.001 wt.-% to about ≤ 5 wt.-% of at least one aromatic carbonic acid ester, preferably benzyl benzoate;
- about ≥ 0.001 wt.-% to about ≤ 15 wt.-% of at least one reducing agent, preferably formamidine sulfinic acid, or oxidizing agent, preferably sodium peroxodisulfate;
- about ≥ 0.001 wt.-% to about ≤ 10 wt.-% of at least one alkaline agent, preferably NaOH;

- optional about ≥ 0.001 wt.-% to about ≤ 15 wt.-% of at least one aromatic hydrocarbons, preferably $C_3$ - alkyl substituted benzene;
- optional about ≥ 0.001 wt.-% to about ≤ 5 wt.-% of at least one alkyl substituted benzene sulfonic acid, preferably $C_9$ to $C_{13}$ - alkyl substituted benzene sulfonic acid;
- optional about ≥ 0.001 wt.-% to about ≤ 5 wt.-% of at least one organic acid, preferably benzene sulfonic acid;
- optional about ≥ 0.001 wt.-% to about ≤ 2 wt.-% of at least one first tenside, preferably an non-ionic tenside, and more preferred isotridecanolethoxylate;
- optional about ≥ 0.001 wt.-% to about ≤ 2 wt.-% of at least one second tenside, preferably 2-(2-butoxy-ethoxy)ethanol;
- a solvent, preferably water, is added at 100 wt.-%.

**26.** The method according to any of the previous claims 1 to 25, wherein the decoloring composition comprises, based on the total weight of the decoloring composition:

- about ≥ 0.001 wt.-% to about ≤ 10 wt.-% of at least one aromatic carbonic acid ester, preferably benzyl benzoate;
- about ≥ 0.001 wt.-% to about ≤ 10 wt.-% of at least one reducing agent, preferably formamidine sulfinic acid, or oxidizing agent, preferably sodium peroxodisulfate;
- about ≥ 0.001 wt.-% to about ≤ 15 wt.-% of at least one alkaline agent, preferably NaOH;
- optional about ≥ 0.001 wt.-% to about ≤ 3 wt.-% of at least one alkyl benzene sulfonic acid, preferably $C_9$ to $C_{13}$ - alkyl substituted benzene sulfonic acid;
- optional about ≥ 0.001 wt.-% to about ≤ 2 wt.-% of at least one first tenside, preferably a non-nionic tenside, and more preferred isotridecanolethoxylate;
- optional about ≥ 0.001 wt.-% to about ≤ 5 wt.-% of at least one second tenside, preferably 2-(2-butoxy-ethoxy)ethanol;
- a solvent, preferably water, is added at 100 wt.-%.

**27.** The method according to any of the previous claims 1 to 26, wherein the decoloring composition comprises, based on the total weight of the decoloring composition:

- about ≥ 0.001 wt.-% to about ≤ 10 wt.-% of at least one aromatic carbonic acid ester, preferably benzyl benzoate;
- about ≥ 0.001 wt.-% to about ≤ 10 wt.-% of at least one reducing agent, preferably formamidine sulfinic acid, or oxidizing agent, preferably sodium peroxodisulfate;
- about ≥ 0.001 wt.-% to about ≤ 15 wt.-% of at least one alkaline agent, preferably NaOH;
- optional about ≥ 0.001 wt.-% to about ≤ 5 wt.-% of at least one $C_3$ to $C_{15}$- alcohol, preferably $C_9$ to $C_{12}$ - alcohol;
- a solvent, preferably water, is added at 100 wt.-%.

**28.** The method according to any of the previous claims 1 to 27, wherein the decoloring composition comprises, based on the total weight of the decoloring composition:

- about ≥ 0.001 wt.-% to about ≤ 10 wt.-% of at least one aromatic carbonic acid ester, preferably benzyl benzoate;
- about ≥ 0.001 wt.-% to about ≤ 10 wt.-% of at least one reducing agent, preferably formamidine sulfinic acid, or oxidizing agent, preferably sodium peroxodisulfate;
- about ≥ 0.001 wt.-% to about ≤ 15 wt.-% of at least one alkaline agent, preferably NaOH;
- optional about ≥ 0.001 wt.-% to about ≤ 15 wt.-% of at least one aromatic hydrocarbons, preferably $C_3$ - alkyl substituted benzene;
- optional about ≥ 0.001 wt.-% to about ≤ 5 wt.-% of at least one alkyl substituted benzene sulfonic acid, preferably $C_9$ to $C_{13}$ - alkyl substituted benzene sulfonic acid;
- optional about ≥ 0.001 wt.-% to about ≤ 5 wt.-% of at least one organic acid, preferably benzene sulfonic acid;
- optional about ≥ 0.001 wt.-% to about ≤ 5 wt.-% of at least one $C_3$ to $C_{15}$- alcohol, preferably $C_9$ to $C_{12}$ - alcohol;
- optional about ≥ 0.001 wt.-% to about ≤ 2 wt.-% of at least one first tenside, preferably an non-ionic tenside, and more preferred isotridecanolethoxylate;
- optional about ≥ 0.001 wt.-% to about ≤ 5 wt.-% of at least one second tenside, preferably 2-(2-butoxy-ethoxy)ethanol;
- a solvent, preferably water, is added at 100 wt.-%.

**29.** A decolorized article obtained by a method according to claims 1 to 28.

Europäisches Patentamt
European Patent Office
Office européen des brevets

# EUROPEAN SEARCH REPORT

Application Number
EP 21 15 3465

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X<br>A | US 2006/148914 A1 (CONNOR DANIEL M [US] ET AL) 6 July 2006 (2006-07-06)<br>* claims 1,2,5,6,8,17,18 *<br>* paragraph [0021] *<br>----- | 29<br>1-28 | INV.<br>C08J11/06 |
| X<br>A | WO 2019/047175 A1 (HONG KONG RES INST TEXTILES & APPAREL LTD [CN]) 14 March 2019 (2019-03-14)<br>* claims 1,3 *<br>----- | 29<br>1-28 | |
| | | | TECHNICAL FIELDS SEARCHED (IPC) |
| | | | C08J |

The present search report has been drawn up for all claims

1

| Place of search | Date of completion of the search | Examiner |
|---|---|---|
| The Hague | 15 June 2021 | Niaounakis, Michael |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

## ANNEX TO THE EUROPEAN SEARCH REPORT ON EUROPEAN PATENT APPLICATION NO. EP 21 15 3465

This annex lists the patent family members relating to the patent documents cited in the above-mentioned European search report. The members are as contained in the European Patent Office EDP file on The European Patent Office is in no way liable for these particulars which are merely given for the purpose of information.

15-06-2021

| Patent document cited in search report | Publication date | Patent family member(s) | Publication date |
|---|---|---|---|
| US 2006148914 A1 | 06-07-2006 | NONE | |
| WO 2019047175 A1 | 14-03-2019 | NONE | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 20060148914 A1